(19) **Europäisches Patentamt / European Patent Office / Office européen des brevets**

(11) **EP 2 835 682 A1**

(12) # EUROPEAN PATENT APPLICATION
published in accordance with Art. 153(4) EPC

(43) Date of publication:
**11.02.2015 Bulletin 2015/07**

(51) Int Cl.:
**G02C 7/06** (2006.01)

(21) Application number: **13773153.5**

(22) Date of filing: **05.04.2013**

(86) International application number:
**PCT/JP2013/060516**

(87) International publication number:
**WO 2013/151165 (10.10.2013 Gazette 2013/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.04.2012 JP 2012086221**

(71) Applicant: **HOYA LENS MANUFACTURING PHILIPPINES INC.**
**Cavite (PH)**

(72) Inventors:
• **MORI, Takateru**
**Suwa-shi, Nagano 3928502 (JP)**
• **SHINOHARA, Toshihide**
**Suwa-shi, Nagano 3828502 (JP)**
• **KAGA, Tadashi**
**Suwa-shi, Nagano 3928502 (JP)**

(74) Representative: **Betten & Resch**
**Theatinerstrasse 8**
**80333 München (DE)**

(54) **PROGRESSIVE-POWER LENS AND METHOD FOR DESIGNING PROGRESSIVE-POWER LENS**

(57) There is provided a progressive addition lens, including: a distance portion and a near portion; an object side surface including a first toric surface element; and an eyeball side surface including a second toric surface element that cancels the first toric surface element, wherein the first toric surface element is the element in which a vertical surface power $OVPf_1$ at a distance reference point which is previously defined in the distance portion on the object side surface, is larger than a horizontal surface power $OHPf_1$ at the distance reference point, and $OVPf_1$ is not less than a vertical surface power $OVPn_1$ at a near reference point which is previously defined in the near potion on the object side surface.

FIG.11

EP 2 835 682 A1

**Description**

Technical Field

The present invention relates to a progressive addition lens and a method for designing a progressive addition lens.

Description of Related Art

Patent document 1 describes a biaspherical progressive addition lens capable of reducing a difference in magnification of an image in a distance portion and a near portion, and providing an excellent vision correcting function based on a prescription value, and an effective visual field over a wide range with reduced as-worn distortion. Therefore, according to patent document 1, on a first refraction surface of an object side surface, when a horizontal surface power and a vertical surface power at distance reference point F1, are respectively defined as DHf and DVf, and at this first refraction surface, a horizontal surface power and a vertical surface power at near reference point N1 are respectively defined as DHn and DVn, a relation of DHf + DHn < DVf + DVn, and DHn < DVn are satisfied, and a surface astigmatism component at F1 and N1 on the first refraction surface are canceled by a second refraction surface on an eyeball side surface, thus providing a distance power and an addition power based on a prescription value by combining the first and second refraction surfaces.

Prior Art document

Patent document

Patent document 1: Japanese Patent Laid Open Publication No.2003-344813

Summary of the Invention

Problem to be solved by the Invention

Although performance is improved by these techniques, there is still a user who cannot be accustomed to properties of the progressive addition lens, particularly swing, and therefore further improvement is requested.

Means for solving the Problem

According to an aspect of the present invention, there is provided a progressive addition lens including:

a distance portion and a near portion;
an object side surface including a first toric surface element; and
an eyeball side surface including a second toric surface element that cancels the first toric surface element, wherein the first toric surface element is the element in which a vertical surface power $OVPf_1$ at a distance reference point which is previously defined in the distance portion on the object side surface, is larger than a horizontal surface power $OHPf_1$ at the distance reference point, and $OVPf_1$ is not less than a vertical surface power $OVPn_1$ at a near reference point which is previously defined in the near potion on the object side surface.

Such a progressive addition lens includes the toric surface element on the object side surface where a surface power in a meridional direction is larger than a surface power in a sagittal direction at the distance reference point. The toric surface element on the obj ect side surface (the first toric surface element) is canceled by the eyeball-side toric surface element (the second toric surface element).

The toric surface elements are not aimed at correcting astigmatism, but are effective for suppressing the swing of the image viewed through a progressive addition lens, which is accompanied by a movement of an eye (line-of-sight). For example, such a toric surface element is considered to suppress a displacement of an angle formed by the line-of-sight and the object-side surface, regarding a movement of the line-of-sight for viewing an object through the progressive addition lens. Therefore, the progressive addition lens capable of reducing various aberrations of an image obtained through the progressive addition lens, and further suppressing the swing of the image, can be provided.

The first toric surface element is preferably the element in which $OVPn_1$ is larger than horizontal surface power $OHPn_1$ at the near reference point. In the near portion as well, the progressive addition lens capable of suppressing the swing of the image can be provided.

Regarding the second toric surface element, vertical surface power $IVPf_1$ at a point corresponding to the distance reference point on the eyeball-side surface, horizontal surface power $IHPf_1$ at a point corresponding to the distance reference point, vertical surface power $IVPn_1$ at a point corresponding to the near reference point on the eyeball-side surface, and horizontal surface powers $IHPn_1$, $OVPf_1$, $OHPf_1$, $OVPn_1$, and $OHPn_1$, satisfy the following conditions.

$$IVPf_1 - IHPf_1 = OVPf_1 - OHPf_1$$

$$IVPn_1 - IHPn_1 = OVPn_1 - OHPn_1$$

wherein astigmatic prescription is not included, and $IVPf_1$, $IHPf_1$, $IVPn_1$, and $IHPn_1$ are absolute values.

As an example of the object-side surface of the progressive addition lens, the object-side surface includes a toric surface, in which a vertical surface power is larger than a horizontal surface power, and a difference between the vertical surface power and the horizontal surface power is constant. Thus, design of the object-side surface becomes easy.

According to other aspect of the present invention, there is provided a method for designing a progressive addition lens including a distance portion and a near portion, the method comprising:

1. designing an object-side surface so as to include a first toric surface element and
2. designing an eyeball-side surface so as to include a second toric surface element that cancels the first toric surface element,

The first toric surface element is the element in which vertical surface power $OVPf_1$ at a distance reference point which is previously defined in a distance portion on an object-side surface, is larger than horizontal surface power $OHPf_1$ at the distance reference point, and $OVPf_1$ is not less than vertical surface power $OVPn_1$ at a near reference point which is previously defined in a near portion on the object-side surface.

According to this aspect, the progressive addition lens having the toric surface element included in the object-side surface and the eyeball-side surface can be designed. The toric surface elements are not aimed at correcting astigmatism, but are effective for suppressing a swing of an image. Accordingly, the progressive addition lens capable of suppressing the swing of the image can be designed.

Brief description of the drawings

FIG. 1 is a perspective view showing an example of a spectacle.

FIG. 2 (a) is a plan view schematically showing one of the progressive addition lenses, and FIG. 2(b) is a cross-section view thereof.

FIG. 3 (a) is a view showing an equivalent spherical power distribution of a lens, and FIG. 3(b) is a view showing an astigmatism distribution of a lens, and FIG. 3(c) is a view showing a state of a distortion when a square grid is viewed.

FIG. 4 is a view showing a vestibulo-ocular reflex.

FIG. 5 is a view showing a maximum angle of the vestibulo-ocular reflex.

FIG. 6 is a view showing a state of setting rectangular patterns.

FIG. 7 is a view showing geometrical deviations of the rectangular patterns in an overlapped manner.

FIG. 8 is a view showing a variation of an inclination of a grid line of the rectangular pattern.

FIG. 9 is a view showing a variation amount of a horizontal grid line of the grid lines of the rectangular patterns.

FIG. 10 is a view showing a variation amount of a vertical grid line of the grid lines of the rectangular patterns.

FIG. 11(a) is a view showing a surface power on a principal sight line on an outer surface of a lens of example 1-1, and FIG. 11(b) is a view showing a surface power on a principal sight line on an inner surface of the lens of example 1-1.

FIG. 12(a) is a view showing a surface power on a principal sight line on an outer surface of a lens of example 1-2, and FIG. 12(b) is a view showing a surface power on the principal sight line on an inner surface of a lens of example 1-2.

FIG. 13(a) is a view showing a surface power on a principal sight line on an outer surface of a lens of comparative example 1, and FIG. 13 (b) is a view showing a surface power on a principal sight line on an inner surface of a lens of comparative example 1.

FIG. 14(a) is a view showing a surface power on a principal sight line on an outer surface of a lens of conventional example 1, and FIG. 14 (b) is a view showing a surface power on a principal sight line on an inner surface of a lens of conventional example 1.

FIG. 15 (a) is a view showing a surface astigmatism distribution on an outer surface of a lens of example 1-1, and FIG. 15(b) is a view showing a surface astigmatism distribution on an outer surface of a lens of example 1-2, FIG. 15(c) is a view showing a surface astigmatism distribution on an outer surface of a lens of comparative example 1, and FIG. 15 (d) is a view showing a surface astigmatism distribution on an outer surface of a lens of conventional example 1.

FIG. 16 (a) is a view showing an equivalent spherical surface power distribution on an outer surface of a lens of example 1-1, and FIG. 16(b) is a view showing an equivalent spherical surface power distribution on an outer surface of a lens of example 1-2, FIG. 16(c) is a view showing an equivalent spherical surface power distribution on an outer surface of a lens of comparative example 1, and FIG. 16 (d) is a view showing an equivalent spherical surface power distribution of a lens of conventional example 1.

FIG. 17 (a) is a view showing a surface astigmatism distribution on an inner surface of a lens of example 1-1, and FIG. 17(b) is a view showing a surface astigmatism distribution on an inner surface of a lens of example 1-2, FIG. 17(c) is a view showing a surface astigmatism distribution on an inner surface of a lens of comparative example 1, and FIG. 17 (d) is a view showing a surface astigmatism distribution on an inner surface of a lens of conventional example 1.

FIG. 18 (a) is a view showing an equivalent spherical surface power distribution on an inner surface of a lens of example 1-1, FIG. 18 (b) is a view showing an equivalent spherical surface power distribution on an inner surface of a lens of example 1-2, FIG. 18(c) is a view showing an equivalent spherical surface power distribution on an inner surface of a lens of comparative example 1, and FIG. 18(d) is a view showing an equivalent spherical surface power distribution on an inner surface of a lens of conventional example 1.

FIG. 19(a) is a view showing an astigmatism distribution of a lens of example 1-1, FIG. 19(b) is a view showing an astigmatism distribution of a lens of example 1-2, FIG. 19 (c) is a view showing an astigmatism distribution of lens of comparative example 1, and FIG. 19(d) is a view showing an astigmatism distribution of a lens of conventional example 1.

FIG. 20 (a) is a view showing an equivalent spherical power distribution of a lens of example 1-1, FIG. 20(b) is a view showing an equivalent spherical power distribution of a lens of example 1-2, FIG. 20(c) is a view showing an equivalent spherical power distribution of a lens of comparative example 1, and FIG. 20(d) is a view showing an equivalent spherical power distribution of a lens of conventional example 1.

FIG. 21 is a view showing a swing (swing index IDd) .

FIG. 22 is a view showing a deformation amount (swing index IDs).

FIG. 23(a) is a view showing a surface power on a principal sight line on an outer surface of a lens of example 2-1, and FIG. 23(b) is a view showing a surface power on a principal sight line on an inner surface of a lens of example 2-1.

FIG. 24(a) is a view showing a surface power on a principal sight line on outer surface of a lens of example 2-2, and FIG. 24(b) is a view showing a surface power on a principal sight line on an inner surface of a lens of example 2-2.

FIG. 25(a) is a view showing a surface power on a principal sight line on an outer surface of a lens of comparative example 2, and FIG. 25(b) is a view showing a surface power on a principal sight line on an inner surface of a lens of comparative example 2.

FIG. 26(a) is a view showing a surface power on a principal sight line on outer surface of a lens of conventional example 2, and FIG. 26 (b) is a view showing a surface power on a principal sight lien on an inner surface of a lens of conventional example 2.

FIG. 27(a) is a view showing a surface astigmatism distribution on an outer surface of a lens of example 2-1, and FIG. 27(b) is a view showing a surface astigmatism distribution on an outer surface of a lens of example 2-2, FIG. 27(c) is a view showing a surface astigmatism distribution on an outer surface of a lens of comparative example 2, and FIG. 27 (d) is a view showing a surface astigmatism distribution on an outer surface of a lens of conventional example 2.

FIG. 28 (a) is a view showing an equivalent spherical surface power distribution on an outer surface of a lens of example 2-1, FIG. 28 (b) is a view showing an equivalent spherical surface power on an outer surface of a lens of example 2-2, FIG. 28(c) is a view showing an equivalent spherical surface power on an outer surface of a lens of comparative example 2, and FIG. 28(d) is a view showing an equivalent spherical surface power on an outer surface of a lens of conventional example 2.

FIG. 29 (a) is a view showing a surface astigmatism distribution on an inner surface of a lens of example 2-1, FIG. 29 (b) is a view showing a surface astigmatism distribution on an inner surface of a lens of example 2-2, FIG. 29(c) is a view showing a surface astigmatism distribution on an inner surface of a lens of comparative example 2, and FIG. 29(d) is a view showing a surface astigmatism distribution on an inner surface of a lens of conventional example 2.

FIG. 30 (a) is a view showing an equivalent spherical surface power distribution on an inner surface of a lens of example 2-1, FIG. 30 (b) is a view showing an equivalent spherical surface power distribution on an inner surface of a lens of example 2-2, FIG. 30(c) is a view showing an equivalent spherical surface power distribution on an inner surface of a lens of comparative example 2, and FIG. 30(d) is a view showing an equivalent spherical surface power distribution on an inner surface of a lens of conventional example 2.

FIG. 31(a) is a view showing an astigmatism distribution of a lens of example 2-1, FIG. 31(b) is a view showing an astigmatism distribution of a lens of example 2-2, FIG. 31 (c) is a view showing an astigmatism distribution of a lens of comparative example 2, and FIG. 31(d) is a view showing an astigmatism distribution of a lens of conventional example 2.

FIG. 32 (a) is a view showing an equivalent spherical power distribution of a lens of example 2-1, FIG. 32 (b) is a view showing an equivalent spherical power distribution of a lens of example 2-2, FIG. 32(c) is a view showing an equivalent spherical power distribution of a lens of comparative example 2, and FIG. 32(d) is a view showing an equivalent spherical power distribution of a lens of conventional example 2.

FIG. 33 is a view showing a swing (swing index IDd).

FIG. 34 is a view showing a deformation amount (swing index IDs).

FIG. 35 is a view showing an image magnification.

FIG. 36 is a flowchart showing a design of a lens and a process of manufacture.

FIG. 37 is a block diagram of a designing device of a lens.

Detailed description of the Invention

Main terms used for explanation of this embodiment will be described hereafter.

"An object-side surface" of a lens means a surface opposed to an obj ect when wearing a spectacle by a wearer, which is also called "an outer surface" and "a convex surface".

"An eyeball-side surface" of a lens means a surface opposed to an eyeball of the wearer when wearing the spectacle by the wearer, which is also called "an inner surface" and "a concave surface".

"A distance portion" of a lens is a visual field part for viewing an object in a long distance (for a distance view).

"A near portion" of a lens is a visual field part for viewing an obj ect in a near distance (for a near view), in which a diopter (power) is different from that of the distance portion.

"An intermediate portion" of a lens is an area for connecting the distance portion and the near portion so that the power is continuously varied, which is also called a portion for an intermediate view, an intermediate corridor, or a progressive zone.

"A distance portion on an object-side surface (eyeball-side surface)" is an area on an object-side surface (eyeball-side surface) corresponding to the distance portion of a lens.

"A near portion on an object-side surface (eyeball-side surface)" is an area on the object-side surface (eyeball-side surface) corresponding to the near portion of a lens.

"An intermediate portion on an object-side surface (eyeball-side surface)" is an area on an object-side surface (eyeball-side surface) corresponding to the intermediate portion of a lens.

"An upper side" of a lens means a head top side of a wearer when wearing a spectacle by a user.

"A lower side" of a lens means a chin side of a wearer when wearing a spectacle by a user.

"A principal sight line" is a line connecting positions on the object-side surface, which are centers of a visual field in a case of a distance vision, an intermediate vision, and a near vision.

"A line corresponding to the principal sight line" is a line connecting positions on the eyeball-side surface, which are centers of a visual field in a case of a distance vision, an intermediate vision, and a near vision.

"A distance reference point" means a coordinate on an object-side surface of a lens in which a dioptric power (transmission power) in a distance portion of a lens is used. The distance reference point is previously defined in the distance portion, and is indicated as needed. Note that the distance reference point may also include a minute area, although the area is a "point".

"A near reference point" means a coordinate on an object-side surface of a lens in which a dioptric power (transmission power) in a near portion of a lens is used. The near reference point is previously defined in the near portion, and is indicated as needed. Note that the near reference point may also include a minute area, although the area is a "point".

"A point corresponding to the distance reference point" means a coordinate of an intersection point of a light beam passing through the distance reference point and vertical to the object-side surface, and the eyeball-side surface.

"A point corresponding to the near reference point" means a coordinate of an intersection point of a light beam passing through the near reference point and vertical to the object-side surface, and the eyeball-side surface.

The "vertical direction" of a lens means the direction of the principal sight line in the distance portion.

Note that the vertical direction may also be a direction orthogonal to a horizontal direction shown by a concealed mark.

The "horizontal direction" of a lens means a direction orthogonal to a vertical direction. Note that generally a concealed mark showing the horizontal direction is applied to a lens.

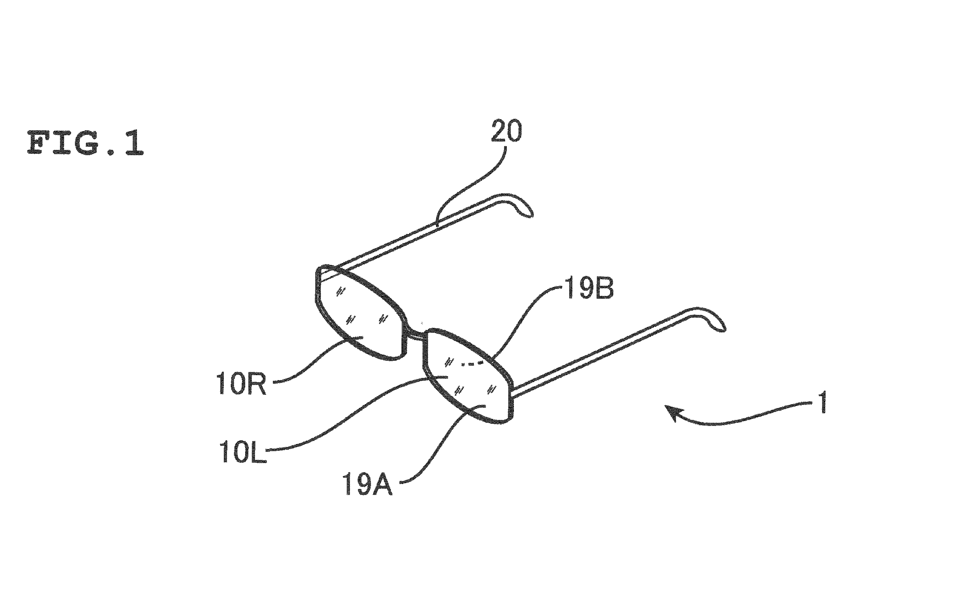

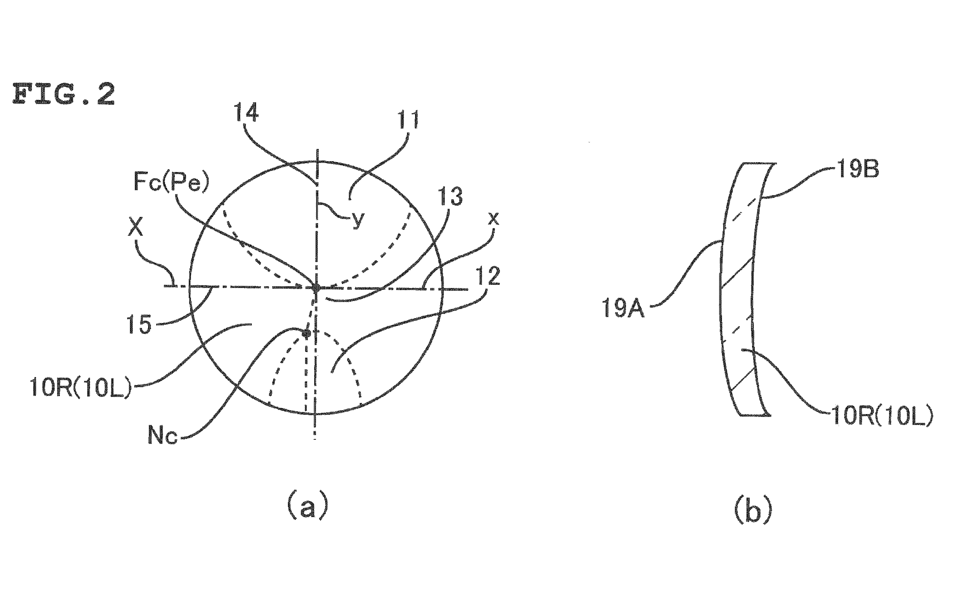

FIG. 1 shows a perspective view of an example of a spectacle. FIG. 2(a) schematically shows a plan view of one of the progressive addition lenses according to an embodiment of the present invention. FIG. 2(b) schematically shows a cross-sectional view of one of the progressive addition lenses.

In this example, explanation is given for a spectacle 1 in which a left side is left and a right side is right viewed from a user side (wearer side or eyeball side). The spectacle 1 has right and left pair of spectacle lenses 10L and 10R for right eyes and left eyes, and a spectacle frame 20 into which the lens 10L and the lens 10R are respectively mounted. The lens 10L and the lens 10R are progressive addition lenses. Basic shapes of the lens 10L and the lens 10R are meniscus lenses having a convex shape toward an object side. Accordingly, the lenses 10L and 10R respectively include an object-side surface 19A and an eyeball-side surface 19B. The spectacle lenses 10R and 10L for right eyes and left eyes are called a lens 10 hereafter in common.

FIG. 2(a) shows the lens 10R for right eyes. The lens 10R includes a distance portion 11 in an upper part and a near portion 12 in a lower part. Further, the lens 10R includes an intermediate portion (progressive corridor or progressive zone) 13. Also, the lens 10R includes a principal sight line 14. A fitting point Pe is usually positioned almost at a lower end of the distance portion 11, which is a reference point on a lens through which a sight line passes in a case of a distance horizontal front view (primary position) when an outer periphery of the lens 10R is shaped in accordance with a frame so as to be mounted in the frame. Hereafter, the fitting point Pe is set as a coordinate origin of a lens, and a coordinate in a direction along a horizontal reference line 15 (line in a horizontal direction passing through the fitting point Pe, X-axis) is set as x-coordinate, and a coordinate in a direction along a vertical reference line (first reference line) Y (line in a vertical direction passing through the fitting point Pe, Y-axis) is y-coordinate. The principal sight line 14 extends almost vertically in a direction of the near portion 12 from the distance portion 11, and is curved to a nose side from a point passing through the fitting point Pe. In this embodiment, distance reference point Fc is set so as to coincide with the fitting point Pe, and near reference point Nc is set so as to coincide with the intersection point of an upper end of the near portion 12 and the principal sight line 14.

Explanation is given hereafter mainly for the lens 10R for right eyes as a lens. However, the lens may be the lens 10L for left eyes, and basically the lens 10L for left eyes has a right and left symmetric structure with respect to the lens 10R for right eyes, excluding a difference of a spectacle specification between right and left eyes.

A range of the visual field in optical performances of the lens 10 can be known by an astigmatism distribution view and an equivalent spherical power distribution view. The swing felt by a user when wearing the lens 10 and moving a head, is given as one of the performances of the lens 10, and a difference is sometimes generated in the swing, even if the astigmatism distribution and the equivalent spherical power distribution are almost the same. Explanation is given hereafter for an evaluation method of the swing, and embodiments of the present application and conventional examples are compared using this evaluation method, and a result thereof is shown hereafter.

1. Evaluation method of swing

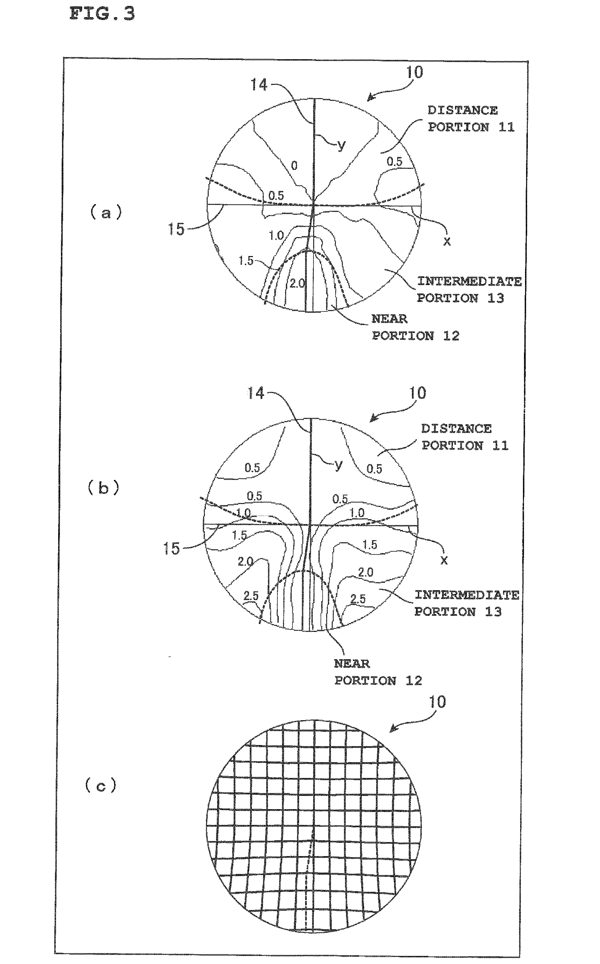

FIG. 3(a) shows the equivalent spherical power distribution (unit is dioptre (D)) of a typical lens 10, FIG. 3(b) shows the astigmatism distribution (unit is dioptre (D)), and FIG. 3 (c) shows a state of a distortion when square grids are viewed through this lens 10. In the lens 10, a specific power is added along the principal sight line 14. By addition of the power, a large astigmatism is generated in a side part of the intermediate area (intermediate portion or progressive area), and therefore an object is blurred in the side part of the intermediate portion 13. In the equivalent spherical power distribution, the power in the near portion 12 is higher by a specific amount than the power in the distance portion 11, and is sequentially reduced from the near portion 12 toward the intermediate portion 13 and the distance portion 11. In this lens 10, the power of the distance portion 11 (distance power Sph) is 0.00D (dioptre), and an addition (ADD) is 2.00D.

A magnification of an image is larger in the near portion 12 in which power is large, than the magnification in the distance portion 11, due to a difference of the power depending on a positon on the lens 10, and a square grid image is warped from the intermediate portion 13 to the side part of the near portion 12. This is a cause of the swing of the image when moving the head.

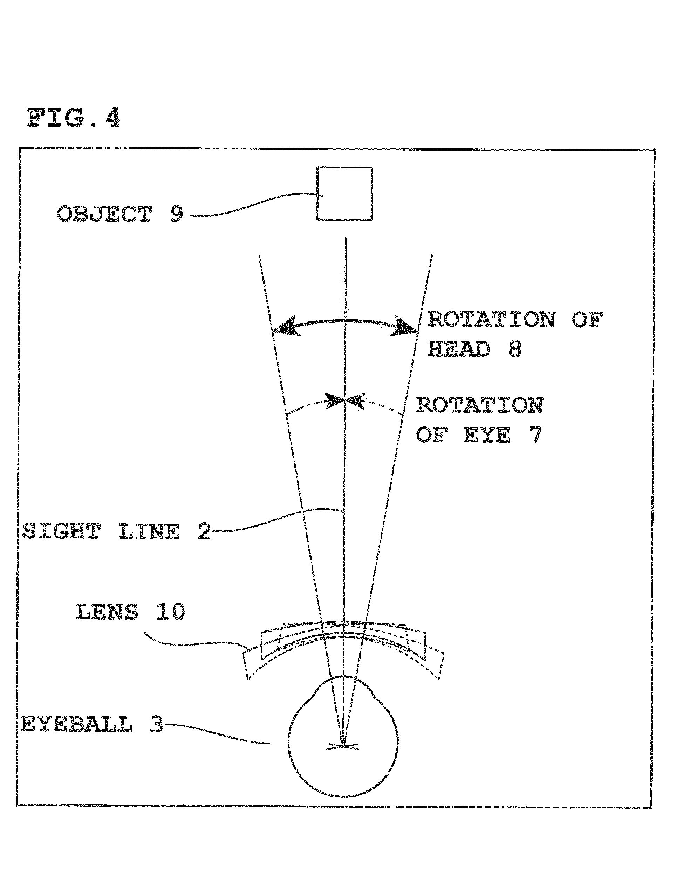

FIG. 4 shows an outline of a Vestibulo-Ocular Reflex (VOR). When a head is moved in viewing an object (object 9 in FIG. 4), the visual field is also moved. At this time, an image on a retina is also moved. If an eyeball 3 moves (rotation (turn) of an eye) so as to cancel the movement of the head (rotation (turn) of a face, and rotation of a head) 8, a sight line 2 is stabilized (is not moved), and the retina image is not moved. Such a reflective eyeball movement having a function of stabilizing the retina image, is called a compensatory eye movement. The vestibule-ocular reflex is one of the compensatory eye movements, in which a reflection is produced, with the rotation of the head as a stimulant. A neural mechanism of the vestibule-ocular reflex by horizontal rotation (horizontal turn) is elucidated to some extent as follows. Namely, it can be considered that rotation 8 of the head is detected by a horizontal semicircular canal, and input from the horizontal semicircular canal adds inhibitory and excitatory action on extraocular muscles, to thereby move the eyeball 3.

When the head rotates, the eyeball is also rotated by the vestibule-ocular reflex, but the retina image is not moved. Then, the lens 10 is rotated in conjunction with rotation of the head as shown by broken line and one dot chain line of FIG. 4. Therefore, the sight line 2 passing through the lens 10 by the vestibule-ocular reflex, moves on the lens 10 relatively. Accordingly, if there is a difference of an imaging performance of the lens 10 in a range in which the eyeball 3 moves by the vestibule-ocular reflex, namely in a range through which the sight line 2 passes by the vestibule-ocular reflex, the retina image sometimes swings.

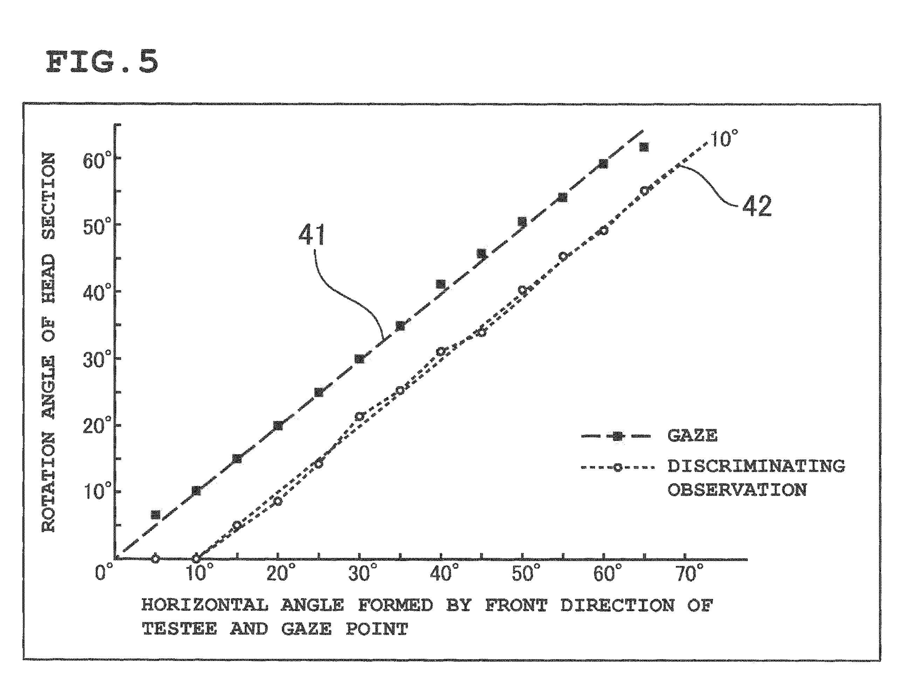

FIG. 5 is a graph showing an example of observing a movement of a head position (primary position) when searching an object. The horizontal axis indicates an angle formed by a front direction of a testee and a gaze point (object), and the vertical axis indicates a rotation angle of the head. A graph shown in FIG. 5 shows a degree of the rotation of the head, to recognize the object that moves by a certain angle from the gaze point in the horizontal direction. In a fixation state for focusing the object, the head is rotated together with the object as shown in graph 41. Meanwhile, in a state of a discriminating view for simply recognizing the object, as shown in graph 42, the movement of the head becomes smaller (reduced) by about 10 degrees than the angle (movement) of the object. Owing to such an observation result, a limit of a range of recognizing the object by the movement of the eyeball can be set to about 10 degrees. Accordingly, it can be considered that a rotation angle of the head in the horizontal direction when viewing the object by the vestibule-ocular reflex while moving a human head in a natural state, is about 10 degrees in maximum in right and left (a maximum horizontal angle $\theta xm$ formed by the movement of the eyeball 3 by the vestibule-ocular reflex).

Meanwhile, in a case of the lens, there is a variation in powers in the intermediate portion 13, and therefore if the rotation of the head is large in the vertical direction when viewing the object 9 by the vestibule-ocular reflex, powers are not fitted to a distance of the object, thus blurring the image. Therefore, it can be considered that the maximum rotation angle of the head in the vertical direction when viewing the object 9 by the vestibule-ocular reflex, is smaller than the maximum rotation angle in the horizontal direction. As described above, the rotation angle of the head which is a parameter in a case of performing a simulation of the swing, is about 10 degrees in the horizontal direction in right and left, and is smaller than the horizontal maximum rotation angle in the vertical direction, and is about 5 degrees vertically for example, and such a rotation angle of the head is preferably used. Further, a typical value of the range in which the sight line moves by the vestibule-ocular reflex, is about ±10 degrees in the horizontal direction in right and left of the principal sight line 14.

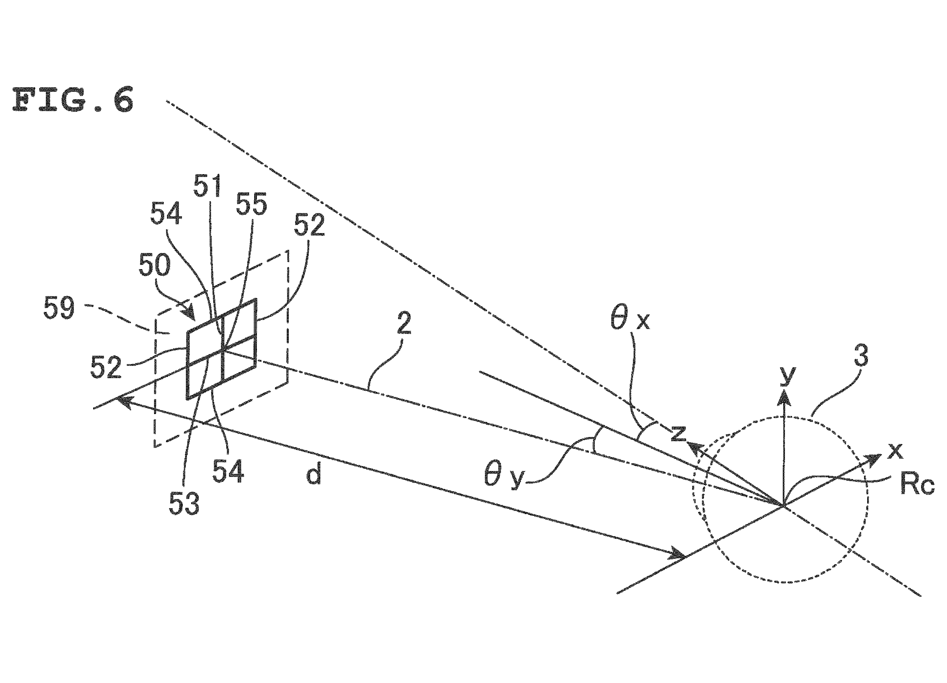

FIG. 6 shows a state that simulation is performed for a vision in consideration of the vestibule-ocular reflex when rotating the head to the object 9 disposed on a virtual surface 59 in a virtual space. In an example shown in FIG. 6, the object 9 is a rectangular pattern 50 (sign of the object 9 is not shown in FIG. 6). The z-axis is set in a horizontal front direction, with rotation center Rc of the eyeball 3 as an origin, and the x-axis is set in the horizontal direction and the y-axis is set in the vertical direction in the virtual space. The x-axis, y-axis, and z-axis are orthogonal to each other. The rectangular pattern 50 is formed on the virtual surface 59 across distance d in a direction of angle $\theta x$ with respect to y-z plane and angle $\theta y$ with respect to x-z plane.

In an example shown in FIG. 6, the rectangular pattern 50 is vertically bisected square grid, including central vertical grid line 51 passing through geometrical center 55 and right and left vertical grid lines 52 which are bilaterally symmetrical with respect to the central vertical grid line 51, central horizontal grid line 53 passing through the geometrical center 55, and upper and lower horizontal grid lines 54 which are vertically symmetrical with respect to the central horizontal grid line 53. In the rectangular pattern 50 of the square grid, distance d between the virtual surface 59 and the eyeball 3 is adjusted so that a pitch (interval of the adjacent vertical grid lines 51 (horizontal grid lines 53)) is set on the lens 10 at a viewing angle. Note that the pitch is expressed by an angle (unit°) in the horizontal direction or in the vertical direction, with a straight line connecting the rotation center Rc and the geometrical center 55 as a reference.

In the example shown in FIG. 6, the lens 10 is disposed in front of the eyeball 3 at the same position and in the same posture as an actual as-worn position and posture of the lens 10, and the virtual surface 59 is set so as to view the vicinity of the maximum horizontal angle $\theta xm$ in which the eyeball 3 moves to the gaze point by the vestibule-ocular reflex, namely, so as to view the right and left vertical grid lines 52 and the upper and lower horizontal grid lines 54 at ±10 degrees with respect to the gaze point.

The size of the rectangular pattern 50 of the square grid can be defined by the viewing angle, and can be set in accordance with a viewed object. For example, the pitch of the grid is small on a screen of a mobile computer, and the pitch of the grid is large on the screen of a desktop computer.

Meanwhile, it is appropriate to set the distance d to the virtual surface 59, as a long distance of several meter or more in the distance portion 11, as a near distance of about 40 cm to 30cm in the near portion 12, and as an intermediate distance of about 1m to 50cm in the intermediate portion 13 , because there is a variation in the distance of the object 9 estimated by the distance portion 11, the intermediate portion 13, and the near portion 12. However, there is no necessity for strictly setting the distance d in accordance with distance, intermediate, and near areas on the lens, because the object in a distance of 2m to 3m is supposed to be observed in the intermediate portion 13 and the near portion 12, when walking.

The rectangular pattern 50 is observed by refraction of the lens 10, in a direction of the viewing angle deviated from a viewing direction (θx, θy). An observation image of the rectangular pattern 50 at this time, can be obtained by a normal ray tracing method. If the head is rotated by +α° in the horizontal direction with this state as a reference, the lens 10 is also rotated by +α° together with a face. At this time, the eyeball 3 is reversely rotated by α°, namely -α° by the vestibule-ocular reflex, and therefore the sight line 2 views the geometrical center 55 of the rectangular pattern 50 on the lens 10 using a position moved by -α°. Accordingly, a transmission point of the sight line 2 through the lens 10 and an incident angle on the lens 10 are varied, and therefore the rectangular pattern 50 is observed in a form different from an actual form. Such a deviation in the form is a factor of causing the swing of the image.

Therefore, in the evaluation method of the swing described in this section, an image of the rectangular pattern 50 is obtained at both end positions of maximum or specific rotation angle θ × 1 at the time of repeated right and left, or upper and lower rotation of the head, and the obtained image is overlapped on the geometrical center 55, to thereby geometrically calculate the deviation of the form of both images. Maximum horizontal angle θ × m (about 10 degrees) in which the eyeball 3 moves by the vestibule-ocular reflex, is given as an example of the horizontal angle θ × 1.

Swing index IDd showing a vibration can be given as one of the indexes used for evaluating the swing in this embodiment, thereby showing a variation of inclinations of the horizontal grid lines 53 and 54, and the vertical grid lines 51 and 52. The other one is a swing index IDs showing a deformation amount, thereby showing a moving area of the horizontal grid lines 53 and 54, and the vertical grid lines 51 and 52.

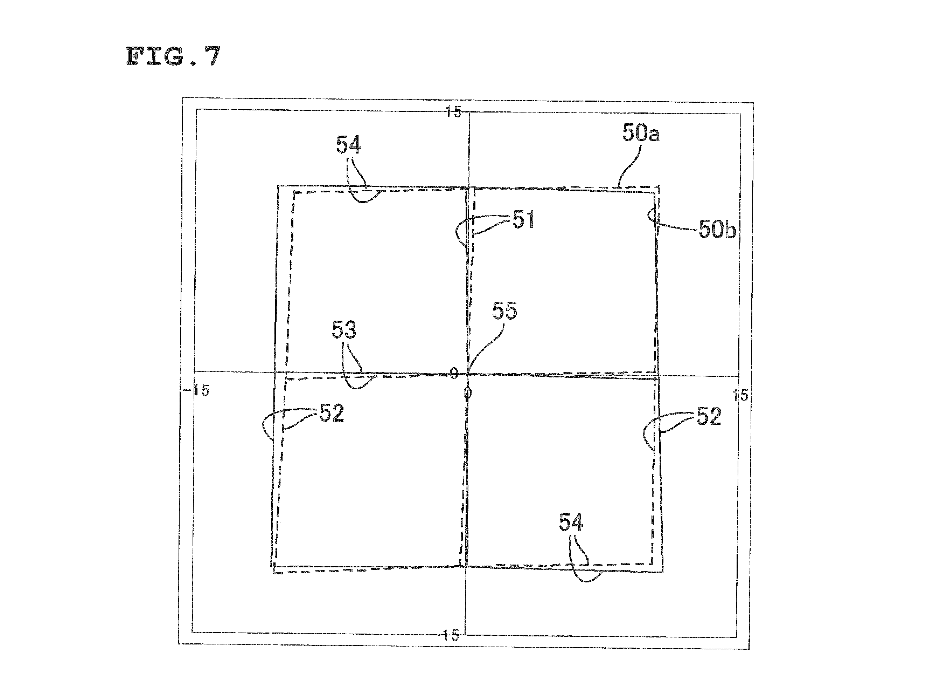

FIG. 7 shows an example of the image of the rectangular pattern 50 when moving the eyeball 3 and the rectangular pattern 50 in right and left at first horizontal angle (shaking angle) θ × 1 (10 degrees) with respect to the gaze point. A state shown in FIG. 7 corresponds to a state of viewing the rectangular pattern 50 so that the sight line 2 does not move from the geometrical center 55 of the rectangular pattern 50, when the head moves in right and left in an as-worn state of the lens 10 at 10 degrees of the horizontal angle (shaking angle) θ × 1. The rectangular pattern 50a (broken line) is an image (right rotation image) observed at shaking angle of 10° through the lens 10 by the ray tracing method, and the rectangular pattern 50b (solid line) is an image (left rotation image) similarly observed at shaking angle of -10°. In FIG. 7, the rectangular patterns 50a and 50b are shown in a state of being overlapped on each other so that the geometrical centers 55 coincide with each other. Note that the image of the rectangular pattern 50 observed at shaking angle of 0° is positioned almost in a middle of them (not shown) . An image observed when setting the shaking angle vertically (upper rotation image and lower rotation image) can also be similarly obtained.

The rectangular patterns 50a and 50b correspond to the image of the rectangular pattern 50 which is actually recognized by a user when shaking a head while viewing the rectangular pattern 50 through the lens 10. A difference between the rectangular patterns 50a and 50b corresponds to the movement of the image actually recognized by the user when shaking the head.

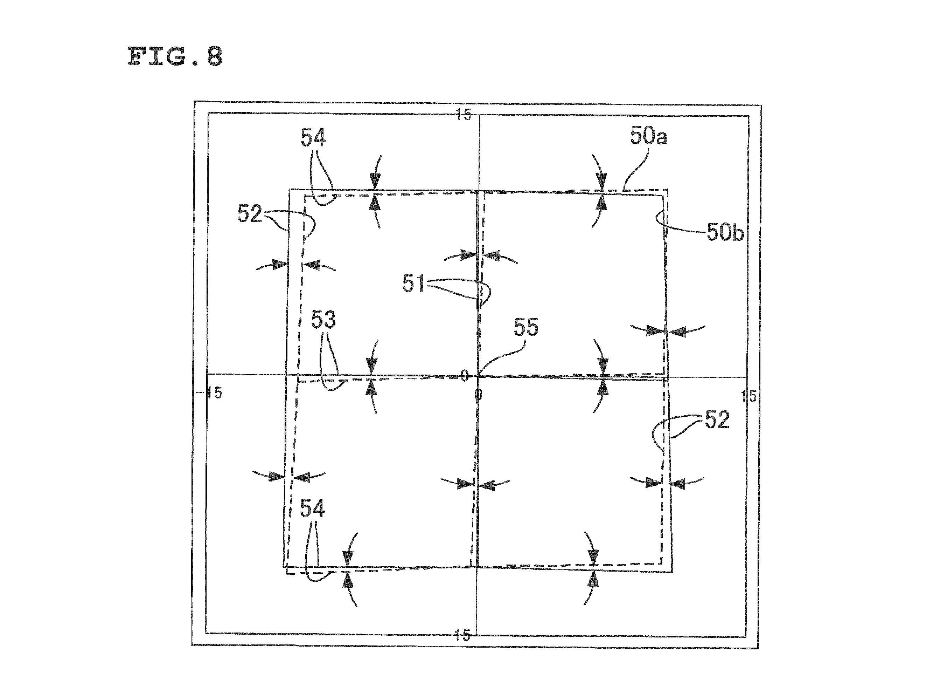

FIG. 8 is a view showing the swing index (index number) IDd. The swing index IDd is an index of indicating a variation of inclinations of each one of the grid lines 51 to 54. As shown in FIG. 8, by geometrically calculating the variation amounts in gradients of the vertical grid line 51, the vertical grid line 52, the horizontal grid line 53 and the horizontal grid line 54 of the rectangular pattern 50, twelve swing indexes IDd can be obtained. In these swing indexes, it can be considered that the variation amounts in gradients of the horizontal grid lines 53 and 54 indicate a "waving (swell)", and the variation amounts in gradients of the vertical grid liens 51 and 52 indicate "flicker". Accordingly, when the variation amounts in gradients of the horizontal grid line 53 and the horizontal grid line 54 are added-up, the swing can be quantitatively evaluated as "sense of waving (swell)". Further, when the variation amounts in gradients of the vertical grid line 51 and the vertical grid line 52 are added-up, the swing can be quantitatively evaluated as "sense of flicker".

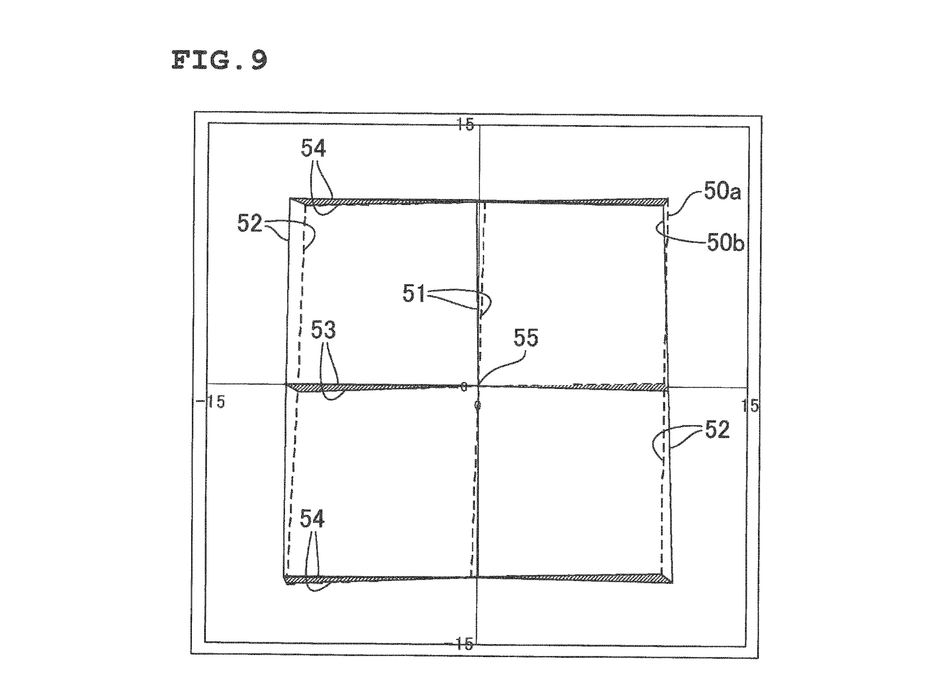

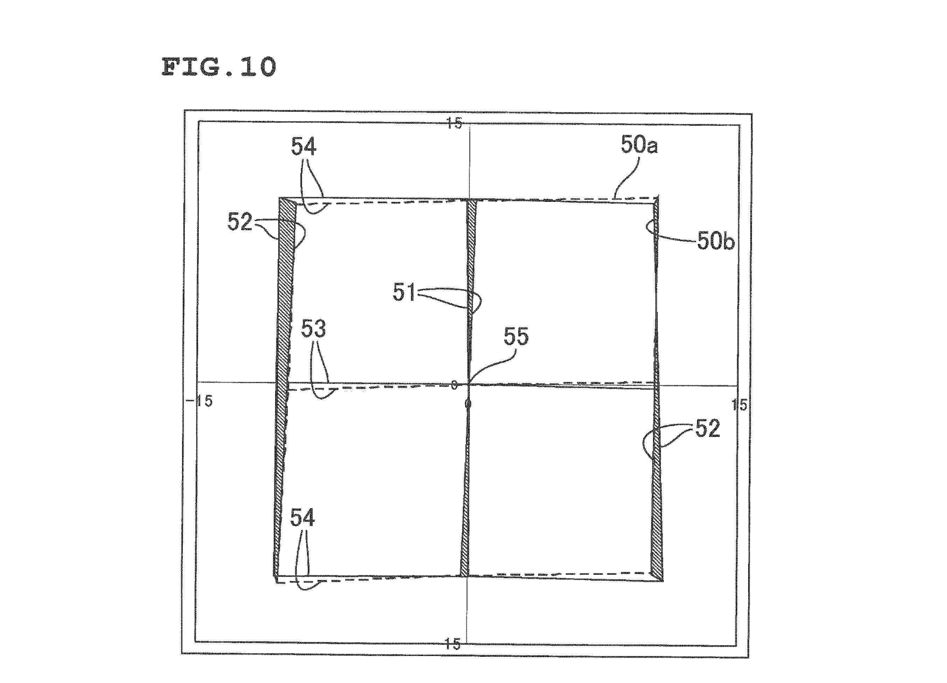

FIG. 9 and FIG. 10 are views showing the swing index IDs, which is an index indicating a moving area of the vertical grid line 51, the vertical grid line 52, the horizontal grid line 53, and the horizontal grid line 54. Namely, the swing index IDs corresponds to a magnitude of the deformation of the entire shape of the rectangular pattern 50. As shown in FIG. 9 and FIG. 10, twelve numerical values of the swing index IDs can be obtained by geometrically calculating each moving amount of the vertical grid line 51, the vertical grid line 52, the horizontal grid line 53, and the horizontal grid line 54 of the rectangular pattern 50, as an area. FIG. 9 shows the moving amount (shaded part) of the horizontal grid lines 53 and 54, and FIG. 10 is a view showing the moving amount of the vertical grid lines 51 and 52 (shaded part). Similarly to the swing index IDd, the swing index IDs indicated by the moving amount (area) can quantitatively evaluate the "sense of flicker" by adding-up the moving amounts of the vertical grid line 51 and the vertical grid line 52, and the "sense of swell (waving)" by adding-up the moving amounts of the horizontal grid line 53 and the horizontal grid line 54. However, when the lens 10 has a large variation of magnification at a point near an evaluation point, for example when deformation such as expansion and contraction occurs in the horizontal direction, the swing index IDs is the index including such an element.

The unit of the swing index IDd is dimensionless, because the swing index IDd indicates the variation amount of the gradient of each grid line on the viewing angle coordinate. Meanwhile, the unit of the swing index IDs is the square of degree (°) because the swing index IDs indicates the area on the viewing angle coordinate. Note that a value obtained by dividing the moving area of the vertical grid line 51, the vertical grid line 52, the horizontal grid line 53, and the horizontal grid line 54, by the area of the rectangular pattern 50 before the head is caused to rotate (0 degree) and expressed by ratio (for example percentage), can also be used as the swing index IDs.

The swing indexes IDd and IDs can be properly used depending on the purpose of use, as a horizontal component (index of "sense of waving (swell)"), a vertical component (index of "sense of flicker"), and a sum of them. The swing index IDd obtained from the variation of gradients is sometimes expressed as "vibration", and the swing index IDs obtained from the moving amount of the grid line is sometimes expressed as "deformation amount" hereafter.

Index IDd indicating vibration is a value obtained by adding or averaging the variation amount of gradients of all horizontal grid lines 53 and 54 including the central horizontal grid line 53 (horizontal component), and the variation amount of gradients of all vertical grid lines 51 and 52 including the central vertical grid line 51 (vertical component). Namely, swing index IDd is a sum or an average of the variation amounts of gradients of all grid lines hereafter.

When the user actually feels the swing, the swing is felt as a flicker of an outline (approximately the shape) of the object which is grasped as a form, rather than a flicker of only one horizontal or vertical line included in the object. Then, from this fact, the horizontal component and the vertical component of IDd is close to the sense of the user. Further, the horizontal direction and the vertical direction are simultaneously felt by the user, and therefore it can be said that the sum of them is the index close to the sense of the user. However, when there is a possibility that sensitivity to the "swell (waving)" and "flicker" is different depending on the user, or when eye movement frequently occurs in the horizontal direction as a use of the sight line under individual living environment, the following cases can be considered: a case that the "swell (waving)" is a problem, or a case that the "flicker" is a problem on the contrary. Accordingly, the swing is indicated by index and evaluated, by each direction component.

Hereafter, index IDs indicating the deformation amount is the sum of a change area of all horizontal grid lines 53 and 54 including the central horizontal grid line 53, and a change area of all vertical grid lines 51 and 52 including the central vertical grid line 51.

The merit of the index IDs by the deformation amount is a point that the variation of magnification is taken into consideration. Power addition in the vertical direction is taken into consideration, particularly in a case of the lens 10. Therefore, when viewing an object by shaking the head vertically, there is a phenomenon that an image is expanded or contracted depending on the variation of powers, or the image is viewed in a state of swinging back and forth. Further, when addition power is large, there is a remarkable phenomenon that the magnification drops in the side part of the near portion. Therefore, expansion and contraction occurs in a lateral direction of the image. Index IDs indicating the deformation amount can digitize the variation, and therefore is useful as the evaluation method.

2. Embodiment 1

The object-side surface (outer surface) 19A of the lens 10 according to the following embodiment, includes a first toric surface element (element of a toric surface on the object-side surface) TF1 in which vertical surface power $OVPf_1$ at distance reference point Fc, is larger than horizontal surface power $OHPf_1$ at distance reference point Fc, and $OVPf_1$ is not less than vertical surface power $OVPn_1$ at near reference point Nc. The first toric surface element TF1 includes the following conditions.

$$OVPf_1 > OHPf_1 \quad … \quad (1a)$$

$$OVPf_1 \geq OVPn_1 \quad … \quad (1b)$$

Formula (1a) shows that distance reference point Fc includes the toric surface (toroidal surface) element.

Formula (1b) shows that in the power of the object-side surface 19A, addition is zero or reversed which is larger than the surface power in the near portion 12, regarding the vertical surface power at least at the reference point.

In each embodiment described hereafter, in outer surface 19A, vertical surface power OVPf at arbitrary point y on the principal sight line 14 of the distance portion 11, is larger than horizontal surface power OHPf at this point y, and OVPf is not less than vertical surface power OVPn at arbitrary point x in the near portion 12. Namely, outer surface 19A satisfies the following conditions.

$$OVPf > OHPf \quad … \quad (1aa)$$

$$OVPf \geq OVPn \ldots (1ba)$$

Formula (1aa) shows that an area along the principal sight line 14 includes the toric surface (toroidal surface) element.

Formula (1ba) shows that in the power of the outer surface 19A, addition is zero or reversed regarding the vertical surface power at least in the area along the principal sight line 14.

The first toric surface element TF1 preferably includes the following conditions regarding the vertical surface power $OVPn_1$ and the horizontal surface power $OHPn_1$ at near reference point Nc.

$$OVPn_1 \geq OHPn_1 \ldots (1c)$$

Near reference point Nc on the outer surface 19A may include the toric surface element in which the horizontal surface power is larger than the vertical surface power. However, in a case of a coexistence of the toric surfaces, such as the toric surface in which the vertical surface power is larger than the horizontal surface power, and the toric surface in which the horizontal surface power is larger than the vertical surface power, this is possibly a factor of expanding the swing of the image when viewing the image through the lens 10. Accordingly, near reference point Nc also preferably includes the toric surface element in which the vertical surface power is larger than the horizontal surface power. Therefore, the first toric surface element TF1 preferably satisfies the following condition.

$$OVPn_1 > OHPn_1 \ldots (1c')$$

In the following embodiment, outer surface 19A is preferably the surface (toric surface) satisfying the following condition. Namely, the condition preferably includes the following condition, regarding the vertical surface power OVPn at arbitrary point x on the principal sight line 14 in the near portion 12 of the outer surface 19A, and the horizontal surface power OHPn at this point x.

$$OVPn \geq OHPn \ldots (1ca)$$

Near portion 12 of the outer surface 19A may include the toric surface element in which the horizontal surface power is larger than the vertical surface power. However, in the case of a coexistence of the toric surfaces, such as the toric surface in which the vertical surface power is larger than the horizontal surface power, and the toric surface in which the horizontal surface power is larger than the vertical surface power, this is possibly a factor of expanding the swing of the image when viewing the image through the lens 10. Accordingly, near portion 12 also preferably includes the toric surface element in which the vertical surface power is larger than the horizontal surface power. Therefore, the toric surface element of the outer surface 19A preferably satisfies the following condition.

$$OVPn > OHPn \ldots (1ca')$$

Characteristic of a human sense of viewing when using the lens 10 is as follows: use frequency on the principal sight line 14 or reference line Y is extremely large, and the swing of the image is felt when viewing work is performed using the vicinity of the principal sight line 14. Accordingly, conditions for the outer surface 19A shown in the abovementioned conditions (1aa), (1ba) and (1ca), are preferably established at least on the principal sight line 14, and are more preferably established within about 10 mm in the horizontal direction, with the principal sight line 14 as a center. If the conditions are established within 10 mm with the principal sight line 14 as a center, an effect of reducing the swing of the image can be sufficiently obtained.

The eyeball-side surface (inner surface) 19B of the lens 10 includes a second toric surface element TF2 for canceling a shift of the surface power by the first toric surface element TF1. The second toric surface element TF2 includes the following conditions for vertical surface power $IVPf_1$ at a point corresponding to the distance reference point Fc, horizontal surface power $IHPf_1$ at a point corresponding to the distance reference point Fc, vertical surface power $IVPn_1$ at a point corresponding to near reference point Nc, and horizontal surface power $IHPn_1$ at a point corresponding to near reference point Nc.

$$IVPf_1 - IHPf_1 = OVPf_1 - OHPf_1 \quad \dots \quad (2a)$$

$$IVPn_1 - IHPn_1 = OVPn_1 - OHPn_1 \quad \dots \quad (2b)$$

However, these conditions and the conditions described below don't include an astigmatic prescription. Namely, these conditions don't include the astigmatic prescription in a prescription for distance vision. The same thing can be said hereafter. Further, surface powers $IVPf_1$, $IHPf_1$, $IVPn_1$, and $IHPn_1$ are absolute values.

Note that in the following embodiment, inner surface 19B includes the following conditions regarding vertical surface power IVPf at a point corresponding to arbitrary point y on the principal sight line 14 in the distance portion 11, horizontal surface power IHPf at a point corresponding to this point y, vertical surface power IVPn at a point corresponding to arbitrary point x in the near portion 12, and horizontal surface power IHPn at a point corresponding to this point x.

$$IVPf - IHPf = OVPf - OHPf \quad \dots \quad (2aa)$$

$$IVPn - IHPn = OVPn - OHPn \quad \dots \quad (2ba)$$

However, these conditions and the conditions described below don't include the astigmatic prescription. Namely, these conditions don't include the astigmatic prescription in the prescription for distance vision. The same thing can be said hereafter. Further, surface powers IVPf, IHPf, IVPn, and IHPn are absolute values.

Conditions (2a), (2b), (2aa), and (2ba) are condition formulas when thickness of the lens is assumed to be small. A shape factor is added to the formula in consideration of the thickness of the lens used for calculating the power of the lens. For example, condition formulas (2aa) and (2ba) are described as follows.

$$IVPf - IHPf = OVPf/(1 - t/n \times OVPf) - OHPf/(1 - t/n \times OHPf) \quad \dots \quad (2aa')$$

$$IVPn - IHPn = OVPn/(1 - t/n \times OVPn) - OHPn/(1 - t/n \times OHPn) \quad \dots \quad (2ba')$$

Wherein, t indicates the thickness of the lens (unit is meter), and n indicates the refractive index of a lens material.

In this lens 10, if the vertical transmission power (dioptric power) VP(y) and the horizontal transmission power (dioptric power) HP(y) along the principal sight line 14, can be approximately obtained by the following formula, if the sight line 2 is vertical to each surface 19A and 19B.

$$VP(y) = OVP(y) - IVP(y) \quad \dots \quad (3)$$

$$HP(y) = OHP(y) - IHP(y) \ ... \ (4)$$

Wherein, formula (3) and formula (4) are relational formulas when the thickness of the lens is small, and generally can be replaced with a relational formula of adding the shape factor in consideration of the thickness of the lens used for calculating the power of the lens. In this case, the following formula (3a) and formula (4a) are established.

$$VP(y) = OVP(y)/(1 - t/n * OVP(y)) - IVP(y) \ ... \ (3a)$$

$$HP(y) = OHP(y)/(1 - t/n * OHP(y)) - IHP(y) \ ... \ (4a)$$

Wherein, $t$ indicates the thickness of the lens (unit is meter), and n indicates the refractive index of a lens material. OVP (y) is the vertical surface power along the principal sight line 14, IVP(y) is the vertical surface power along the line corresponding to the principal sight line 14, OHP(y) is the horizontal surface power along the principal sight line 14, and IHP(y) is the horizontal surface power along the line corresponding to the principal sight line 14. Further, in order to more accurately obtain the transmission power in a peripheral part of the lens, deviation of points on the outer surface 19A and on the inner surface 19B where the sight line 2 transmits, is obtained by a ray tracing method, and the deviation is reflected on the y-coordinate of the outer surface 19A and the y-coordinate of the inner surface 19B.

Further, in the area other than the principal sight line 14, the sight line 2 for transmitting through each surface 19A and 19B of the lens 10, is inclined from the vertical direction, and therefore a prism effect is required to be taken into consideration. However, the relation of the abovementioned formulas (3) and (4) is approximately established. Further, in a lens having a sufficiently small thickness, the toric surface element can be almost canceled by conditions (2aa) and (2ba). Accordingly, the present invention is further described hereafter, using a thin lens having a sufficiently small thickness as an example.

2.1 Example 1-1

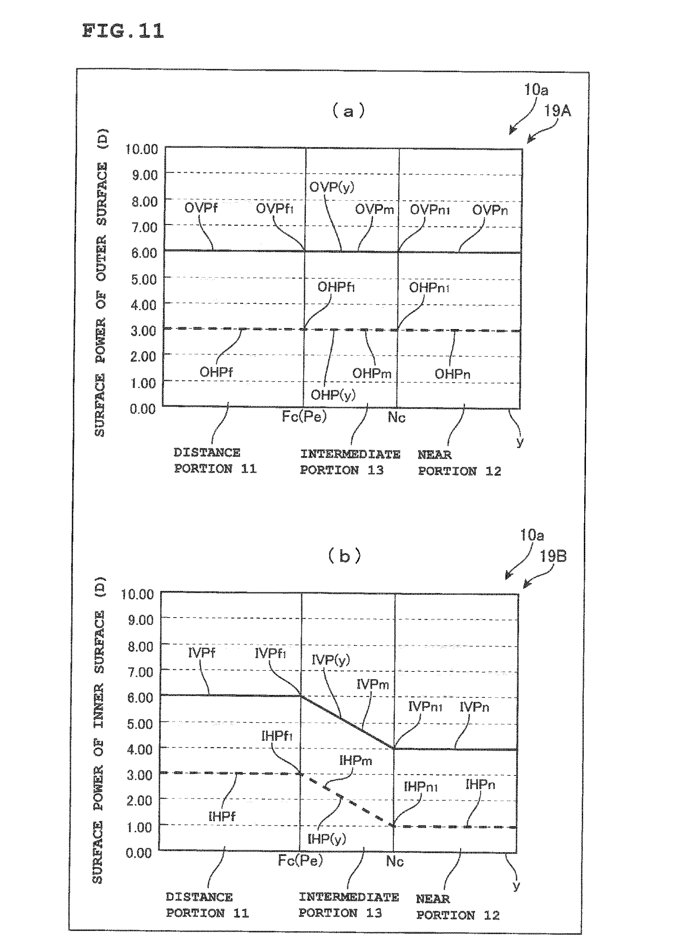

A lens 10a of example 1-1 was designed, as surface powers of the outer surface 19A and inner surface 19B were shown respectively in FIG. 11(a) and FIG. 11(b). The lens 10a of example 1-1 is called an inner surface progressive addition lens including progressive element in the inner surface 19B. A basic spectacle specification is as follows; Refractive index of lens base material:1.67, corridor length:14mm, prescription power (distance power, Sph):0.00D, and addition power (Add):2.00D. Note that the lens 10 of example 1-1 has a diameter of 65 mm, and astigmatic power is not included in the spectacle specification. The lens 10a of example 1-1 is the lens called plano having a mean prescription power of 0(D) in the distance portion 11. The lens 10a of example 1-1 includes the toric surface element on inner/outer surfaces.

In FIG. 11(a), horizontal surface power (front surface power) OHP(y) along the principal sight line 14 on the outer surface (object-side surface) 19A of the lens 10a of example 1-1 is shown by broken line, and vertical surface power (front surface power) OVP(y) is shown by solid line. Note that the unit of the power shown in the figure is dioptre (D), which is used in common unless particularly specified otherwise in each one of the following views.

In FIG. 11(b), horizontal surface power (front surface power) IHP(y) along the principal sight line 14 of the inner surface (eyeball-side surface) 19B of the lens 10a of example 1-1 is shown by broken line, and vertical surface power (front surface power) IVP(y) is shown by solid line. Horizontal surf ace power IHP (y) and vertical surface power IVP(y) of the inner surface 19B are originally negative values, but in this specification, both surface powers of the inner surface 19B are absolute values. The same thing can be said hereafter. Further, the y-coordinate is the coordinate of the principal sight line 14, with the fitting point Pe as an original point. The x-coordinate described below is the coordinate of the horizontal reference line 15, with the fitting point Pe as an original point.

The lens 10a of example 1-1 satisfies the conditions of the abovementioned formulas (1a), (1b), (1c'), (2a), and (2b). Accordingly, the outer surface 19A of the lens 10a includes the first toric surface element TF1, and the inner surface 19B includes the second toric surface element TF2.

Specifically, vertical (vertical direction) surface power $OVPf_1$ at distance reference point Fc, and vertical surface power $OVPn_1$ at near reference point Nc are equally 6.0(D) (Formula (1b)). Also, horizontal (horizontal direction) surface power $OHPf_1$ at distance reference point Fc is 3.0 (D), which is smaller than $OVPf_1$ by 3.0(D) (Formula (1a). At near reference point Nc as well, $OHPn_1$ is smaller than $OVPn_1$ by 3.0(D) (Formula (1c')). At a point corresponding to the distance reference point Fc and a point corresponding to the near reference point Nc on the inner surface 19B as well, difference between $IVPf_1$ and $IHPf_1$ is 3.0(D), and difference between $IVPn_1$ and $IHPn_1$ is 3.0(D), and therefore formulas (2a) and (2b) are established. Namely, the inner surface 19B includes the second toric surface element for canceling the first toric surface element TF1 of the outer surface 19A.

Further, the lens 10a of example 1-1 satisfies the conditions of abovementioned formulas (1aa), (1ba), (1ca'), (2aa) and (2ba). Accordingly, the outer surface 19A of the lens 10a includes the toric surface element in the principal sight line 14, and the inner surface 19B includes the toric surface element along the line corresponding to the principal sight line 14.

Specifically, vertical (vertical direction) surface power OVPf in the distance portion 11, vertical surface power OVPm in the intermediate portion 13, and vertical surface power OVPn in the near portion 12 of the outer surface 19A are constantly 6.0(D) (Formula (1ba)). Also, horizontal (horizontal direction) surface power OHPf in the distance portion, vertical surface power OHPm in the intermediate portion 13, and vertical surface power OHPn in the near portion 12 of the outer surface 19A are constantly 3.0(D). A simple toric surface is formed on the outer surface 19A along the principal sight line 14, in which vertical surface powers OVPf, OVPm and OVPn are larger than horizontal surf ace powers OHPf, OHPm and OHPn by 3. 0 (D) respectively, and formulas (1aa) and (1ca') are established. Typically, the entire outer surface 19A is a simple toric surface.

In the inner surface 19B, vertical surface power IVPf in the distance portion 11 is 6.0(D), vertical surface power IVPm in the intermediate portion 13 is progressively reduced, vertical surface power IVPn in the near portion 12 is 4.0(D), and a specific addition (2.0(D)) is obtained. Also, horizontal surface power IHPf in the distance portion 11 is 3.0(D), horizontal surface power IHPm in the intermediate portion 13 is progressively reduced, horizontal surface power IHPn in the near portion 12 is 1.0(D), and a specific addition (2.0(D)) is obtained.

In the inner surface 19B of the lens 10a, the toric surface is formed along the line corresponding to the principal sight line 14, in which vertical surface powers IVPf, IVPm and IVPn are respectively larger than horizontal surface powers IHPf, IHPm and IHPn by 3.0(D). Therefore, the inner surface 19B includes the toric surface for canceling the surface power caused by the toric surface of the outer surface 19A (Formula (2aa) and (2ba)).

2.2 Example 1-2

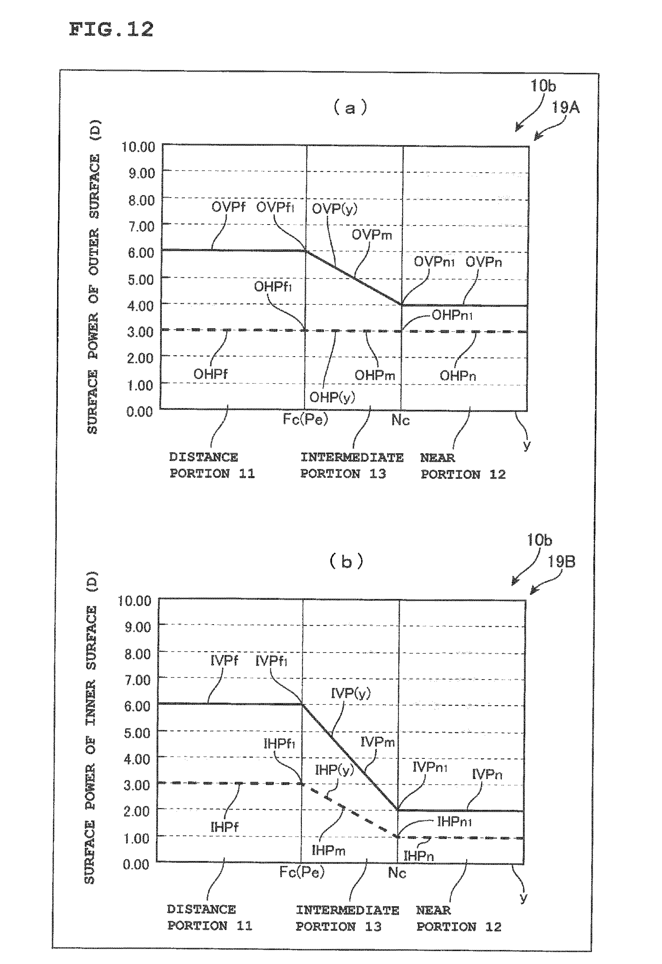

A lens 10b of example 1-2 was designed as surface powers of the outer surface 19A and the inner surface 19B are respectively shown in FIG. 12 (a) and FIG. 12 (b). The lens 10b of example 1-2 is the lens called an outer surface degressive addition lens including a progressive element in the inner surface 19B, and including a degressive element in the outer surface 19A. The basic spectacle specification is the same as example 1-1. Also, terms and expressions described in FIG. 12(a) and FIG. 12(b) are used in common with those of FIG. 11(a) and FIG. 11(b).

The lens 10b of example 1-2 also satisfies the conditions of the abovementioned formulas (1a), (1b), (1c'), (2a) and (2b). Accordingly, the outer surface 19A of the lens 10b includes the first toric surface element TF1, and the inner surface 19B includes the second toric surface element TF2.

Specifically, vertical surface power $OVPf_1$ at distance reference point Fc is 6.0(D), which is larger by 2.0(D) than vertical surface power $OVPn_1$ at near reference point Nc (Formula (1b)). Also, horizontal surface power $OHPf_1$ at distance reference point Fc is 3.0(D), which is smaller than $OVPf_1$ by 3.0(D) (Formula (1a)). $OHPn_1$ is smaller than $OVPn_1$ by 1.0(D) at near reference point Nc (Formula (1c')). At points corresponding to distance reference point Fc and near reference point Nc on the inner surface 19B as well, difference between $IVPf_1$ and $IHPf_1$ is 3.0(D), and difference between $IVPn_1$ and $IHPn_1$ is 1.0(D), and therefore formulas (2a) and (2b) are established. Namely, the inner surface 19B includes the second toric surface element TF2 for canceling the first toric surface element TF1 of the outer surface 19A.

Further, the lens 10b of example 1-2 satisfies formulas (1aa), (1ba), (1ca'), (2aa) and (2ba). Accordingly, the outer surface 19A of the lens 10b includes the toric surface element in the principal sight line 14, and the inner surface 19B includes the toric surface element along the line corresponding to the principal sight line 14.

Specifically, vertical surface power OVPf in the distance portion 11 of the outer surface 19A is 6.0(D), and vertical surface power IVPm in the intermediate portion 13 thereof is progressively reduced, and vertical surface power IVPn in the near portion 12 thereof is 4.0(D) (Formula (1ba)). Horizontal surface power OHPf in the distance portion 11 of the outer surface 19A, vertical surface power OHPm in the intermediate portion 13, and vertical surface power OHPn in the near portion 12 of the outer surface 19A are constantly 3.0(D). Accordingly, the toric surface is formed along the principal sight line 14 on the outer surface 19A, in which vertical surface power OVPf is larger than horizontal surface power OHPf by 3.0 (D) in the distance portion 11, and vertical surface power OVPn is larger than horizontal surface power OHPn by 1.0(D) in the near portion 12 (Formulas (1aa) and (1ca')).

In the inner surface 19B, vertical surface power IVPf in the distance portion 11 is 6.0(D), vertical surface power IVPm in the intermediate portion 13 is progressively reduced, vertical surface power IVPn in the near portion 12 is 2.0(D), and a specific addition (2.0(D)) is obtained for the vertical surface power on the outer surface 19A. Also, horizontal surface power IHPf in the distance portion 11 is 3.0(D), horizontal surface power IHPm in the intermediate portion 13 is progressively reduced, horizontal surface power IHPn in the near portion 12 is 1.0(D), and a specific addition (2.0(D)) is obtained for the horizontal surface power on the outer surface 19A.

Further, the toric surface is formed along the line corresponding to the principal sight line 14 on the inner surface 19B of the lens 10b, in which vertical surface power IVPf is larger than horizontal surface power IHPf by 3.0(D) in the distance portion 11, and vertical surface power IVPn is larger than horizontal surface power IHPn by 1.0 (D) in the near portion 12, wherein the surface power caused by the toric surface of the outer surface 19A is canceled (Formulas (2aa) and (2ba)).

2.3 Comparative example 1

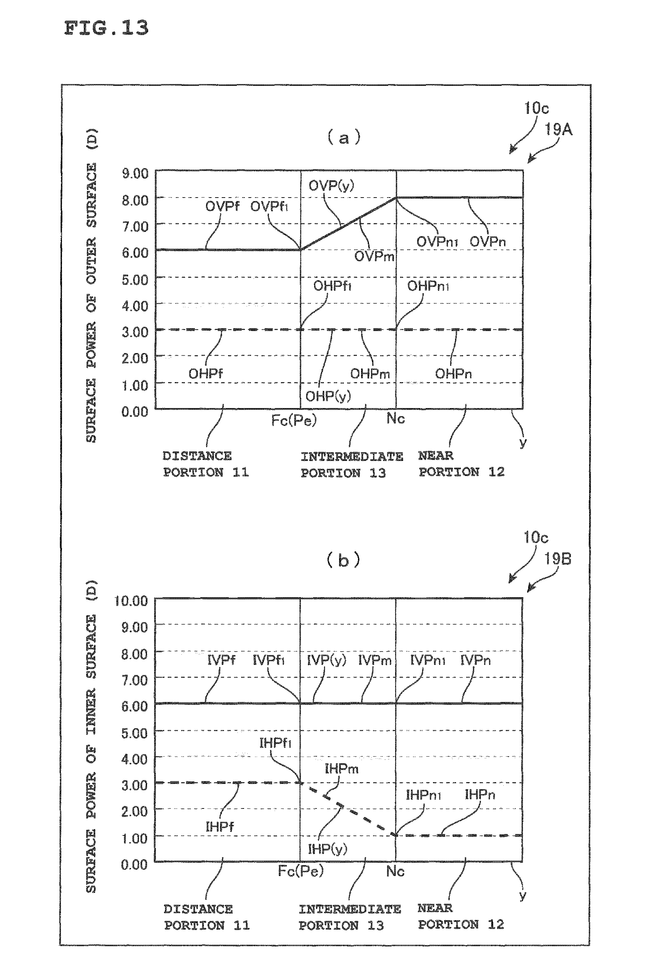

A lens 10c of comparative example 1 was designed as surface powers of the outer surface 19A and inner surface 19B are respectively shown in FIG. 13 (a) and FIG. 13(b). The lens 10c of comparative example 1 is the lens called an inner/outer surface progressive addition lens, including progressive elements in the outer surface 19A and the inner surface 19B. The basic spectacle specification is the same as example 1-1. Also, terms and expressions described in FIG. 13(a) and FIG. 13(b) are used in common with those of FIG. 11 (a) and FIG. 11(b).

In the lens 10c of comparative example 1, vertical surface power $OVPn_1$ at near reference point Nc is larger than vertical surface power $OVPf_1$ at distance reference point Fc. Accordingly, the abovementioned formulas (1a), (1c'), (2a), and (2b) are satisfied, but formula (1b) is not satisfied. Accordingly, the outer surface 19A of the lens 10c includes the toric surface in which vertical surface power is larger than horizontal surface power, and the inner surface 19B includes the element for canceling the toric surface element of the outer surface 19A, but does not include the second toric surface element TF2.

Specifically, horizontal power $OHPf_1$ at distance reference point Fc is 3.0(D), which is smaller than vertical surface power $OVPt_1$ by 3.0(D), and satisfies formula (1a), but surface power $OVPf_1$ is 6.0(D), which is smaller than vertical surface power $OVPn_1$ (8.0(D)) at near reference point Nc, and formula (1b) is not satisfied. However, at near reference point Nc, $OHPn_1$ is smaller than $OVPn_1$ by 5.0(D), and formula (1c') is satisfied, and in the inner surface 19B as well, difference between $IVPf_1$ and $IHPf_1$ is 3.0(D), difference between $IVPn_1$ and $IHPn_1$ is 5.0(D) at the points corresponding to distance reference point Fc and near reference point Nc, and formulas (2a) and (2b) are satisfied. The outer surface 19A and the inner surface 19B include the vertical toric surface element at distance reference point Fc and near reference point Nc, for canceling the other toric surface element of the outer surface 19A and the inner surface 19B.

When the surface power in the distance portion 11 along the principal sight line 14 on the outer surface 19A of the lens 10c of comparative example 1 is observed, it is found that vertical surface power OVPf in the distance portion 11 of the outer surface 19A is 6.0(D), vertical surface power OVPm in the intermediate portion 13 is increased, and vertical surface power IVPn in the near portion 12 is 8.0 (D). Horizontal surface power OHPf in the distance portion 11, vertical surface power OHPm in the intermediate portion 13, and vertical surface power OHPn in the near portion 12 of the outer surface 19A are constantly 3.0(D). Accordingly, the toric surface is formed along the principal sight line 14 on the outer surface 19A, in which vertical surface power OVPf is larger than horizontal surface power OHPf by 3.0(D) in the distance portion 11, and vertical surface power OVPn is larger than horizontal surface power OHPn by 5.0(D) in the near portion 12. Therefore, although formulas (1aa) and (1ca') are satisfied, formula (1ba) is not satisfied.

In the inner surface 19B, vertical surface power IVPf in the distance portion 11, vertical surface power IVPm in the intermediate portion 13 , and vertical surface power IVPn in the near portion 12 are 6.0(D),and a specific addition (2.0(D)) is obtained for the vertical surface power on the outer surface 19A. Also, horizontal surface power IHPf in the distance portion 11 is 3.0(D), horizontal surface power IHPm in the intermediate portion 13 is progressively reduced, horizontal surface power IHPn in the near portion 12 is 1.0 (D), and a specific addition (2.0(D)) is obtained for the horizontal surface power on the outer surface 19A.

In the inner surface 19B of the lens 10c, the toric surface is formed along the line corresponding to the principal sight line 14, in which vertical surface power IVPf is larger than horizontal surface power IHPf by 3.0(D) in the distance portion 11, and vertical surface power IVPn is larger than horizontal surface power IHPn by 5.0(D) in the near portion 12, wherein the surface power caused by the toric surface of the outer surface 19A is canceled. Accordingly, formulas (2aa) and (2ba) are satisfied.

2.4 Conventional example 1

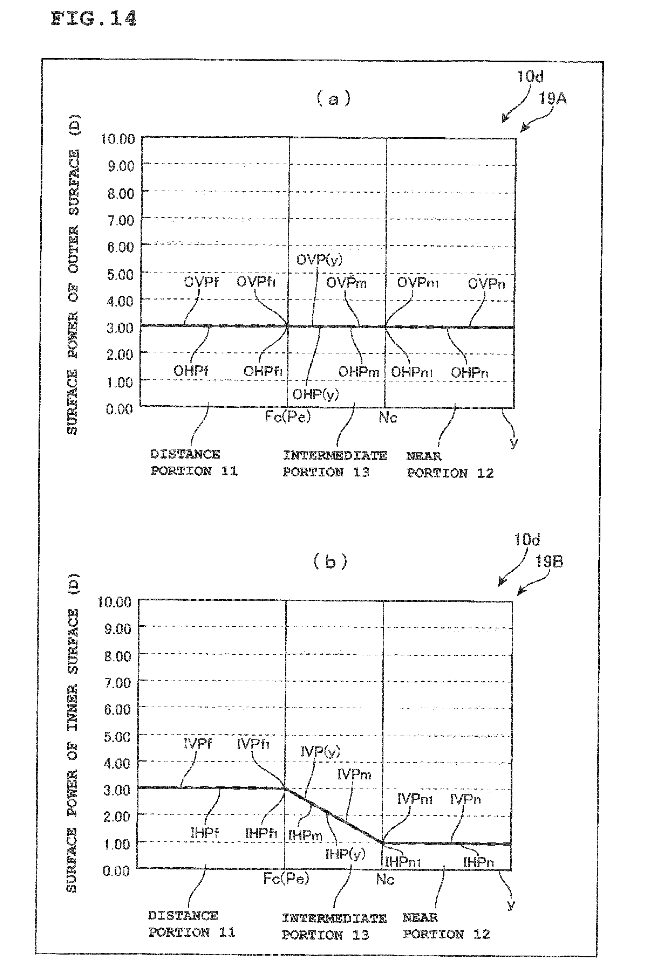

A lens 10d of conventional example 1 was designed as surface powers of the outer surface 19A and inner surface 19B were shown respectively in FIG. 14(a) and FIG. 14(b). The lens 10d of conventional example 1 is the lens called an inner surface progressive addition lens, with an outer surface 19A formed into a spherical surface and including progressive elements in the inner surface 19B. The basic spectacle specification is the same as example 1-1. Also, terms and expressions described in FIG. 14 (a) and FIG. 14 (b) are used in common with those of FIG. 11(a) and FIG. 11(b).

In the lens 10d of conventional example 1, vertical surface powers OVPf, OVPm, and OVPn, horizontal surface powers OHPf, OHPm, and OHPn of the outer surface 19A, are equally 3.0(D). Vertical surface powers IVPf, IVPm, and IVPn of the inner surface 19B, are respectively equal to horizontal surface powers IHPf, IHPm, and IHPn, and the surface power in the distance portion 11 is 3.0(D), and the surface power in the near portion 12 is 1.0(D), and a specific addition is obtained. Accordingly, the outer surface 19A and the inner surface 19B of the lens 10d of conventional example 1 don't include the toric surface.

2.5 Evaluation

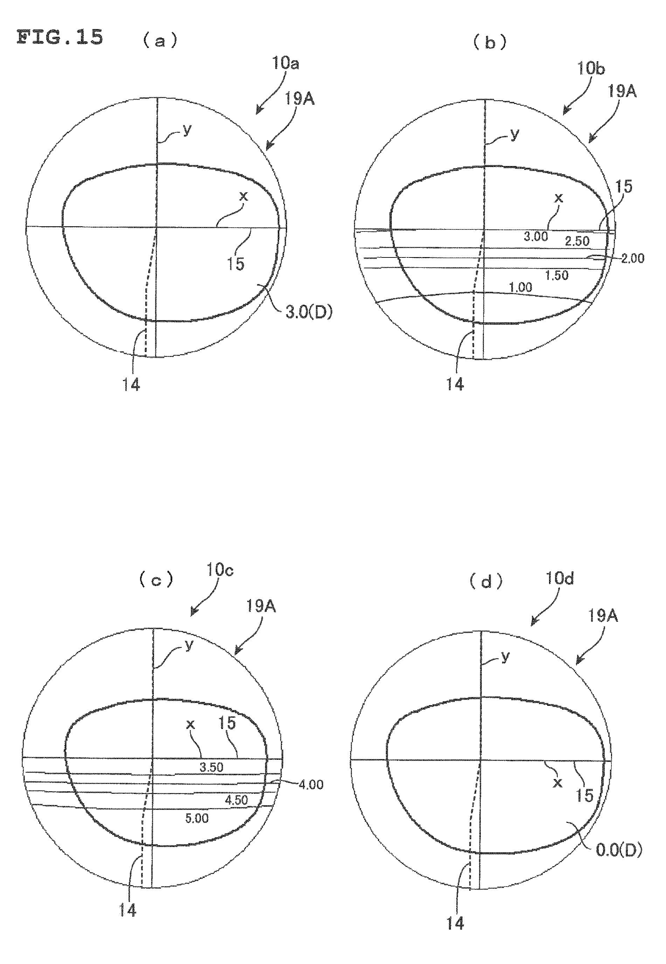

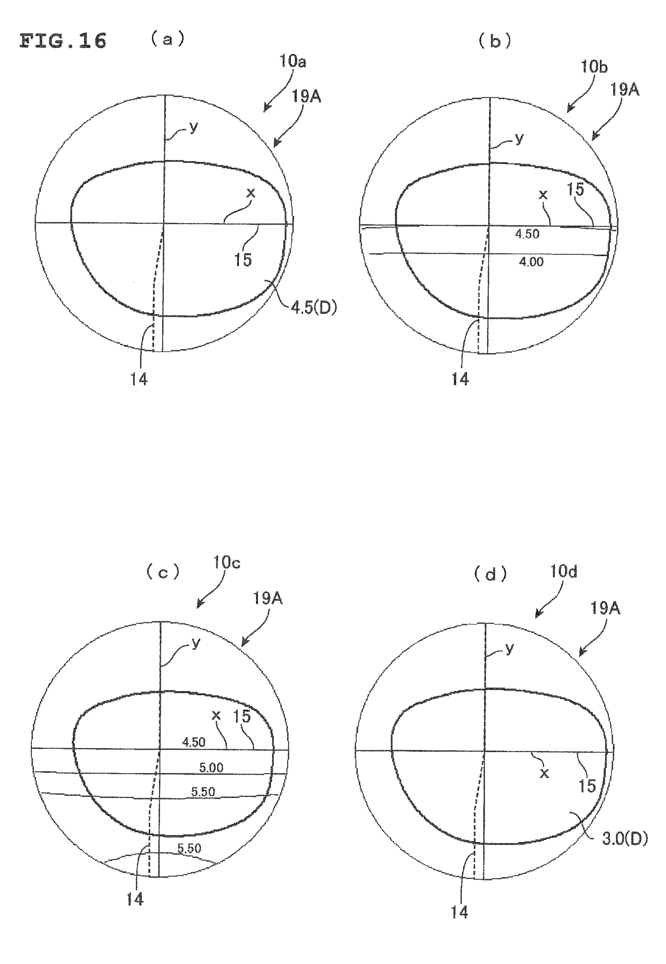

FIG. 15 (a) to FIG. 15 (d) respectively show a surface astigmatism distribution on the outer surface 19A of the lenses 10a to 10d of example 1-1, example 1-2, comparative example 1, and conventional example 1, and FIG. 16(a) to (d) show an equivalent spherical surface power distribution on the outer surface 19A of the lenses 10a to 10d of example 1-1, example 1-2, comparative example 1, and conventional example 1. The equivalent spherical surface power ESP can be obtained by the following formula.

$$ESP = (OHP + OVP)/2 \ldots (5)$$

Wherein, OHP indicates the horizontal surface power at an arbitrary point on the object-side surface (outer surface) 19A, and OVP indicates the vertical surface power on the object-side surface (outer surface) 19A.

The unit of the value shown in each figure is dioptre (D), and vertical/horizontal straight lines show reference lines (vertical reference line Y and horizontal reference line X) passing through the geometrical center of a circular lens, and a shape image is also shown by a thick solid line at the time of mounting the lens in a spectacle frame with the geometrical center as a fitting point Pe, which is an intersection point of the reference lines. Further, the principal sight line 14 is shown by a broken line. The same thing can be said for the figure shown below.

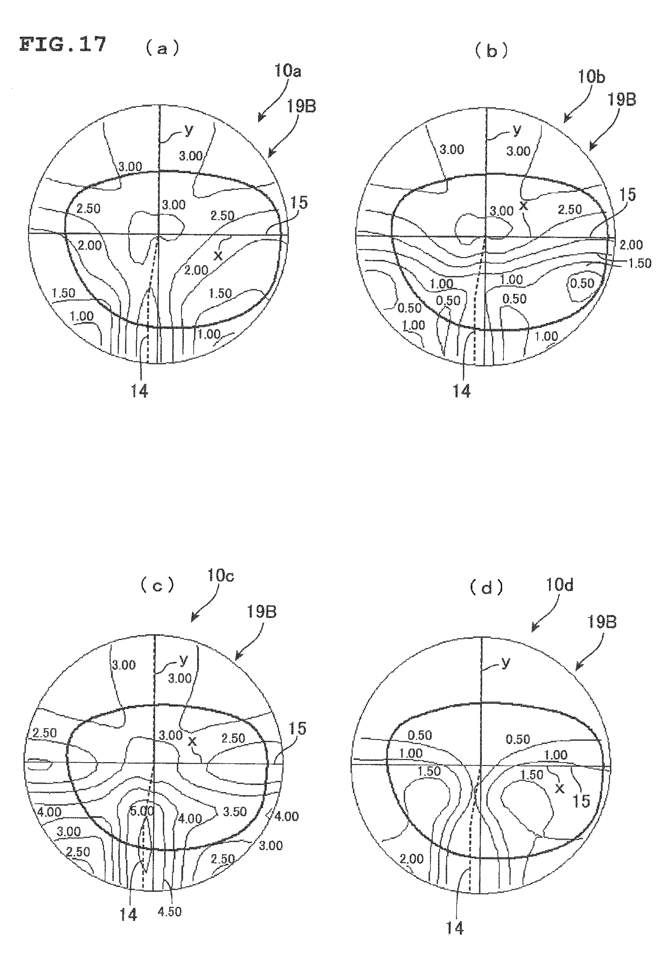

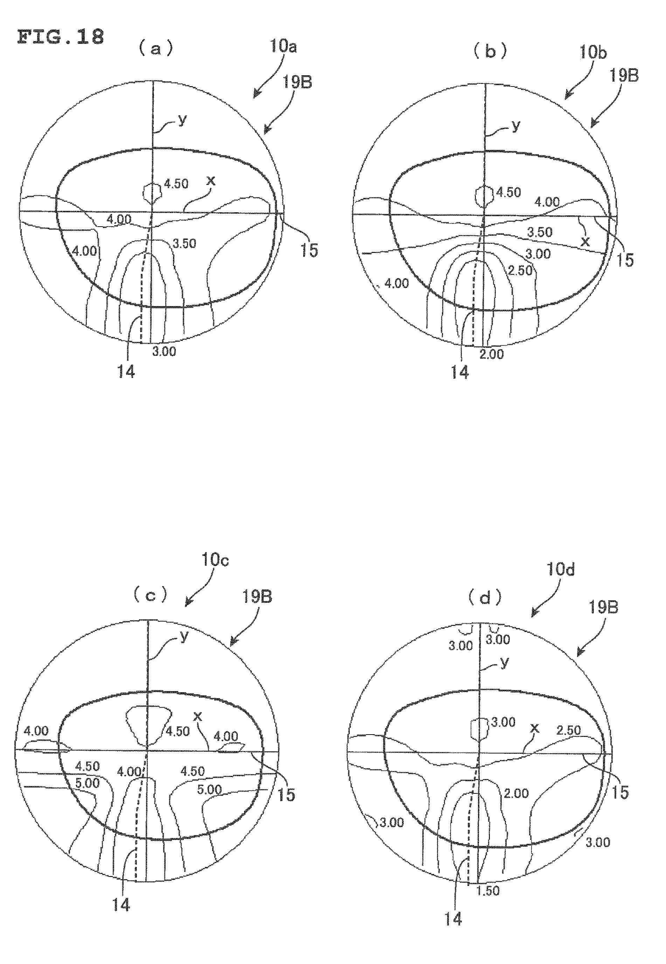

FIG. 17 (a) to FIG. 17 (d) respectively show a surface astigmatism distribution on the inner surface 19B of the lenses 10a to 10d of example 1-1, example 1-2, comparative example 1, and conventional example 1, and FIG. 18(a) to FIG. 18(d) show an equivalent spherical surface power distribution on the inner surface 19B of the lenses 10a to 10d of example 1-1, example 1-2, comparative example 1, and conventional example 1.

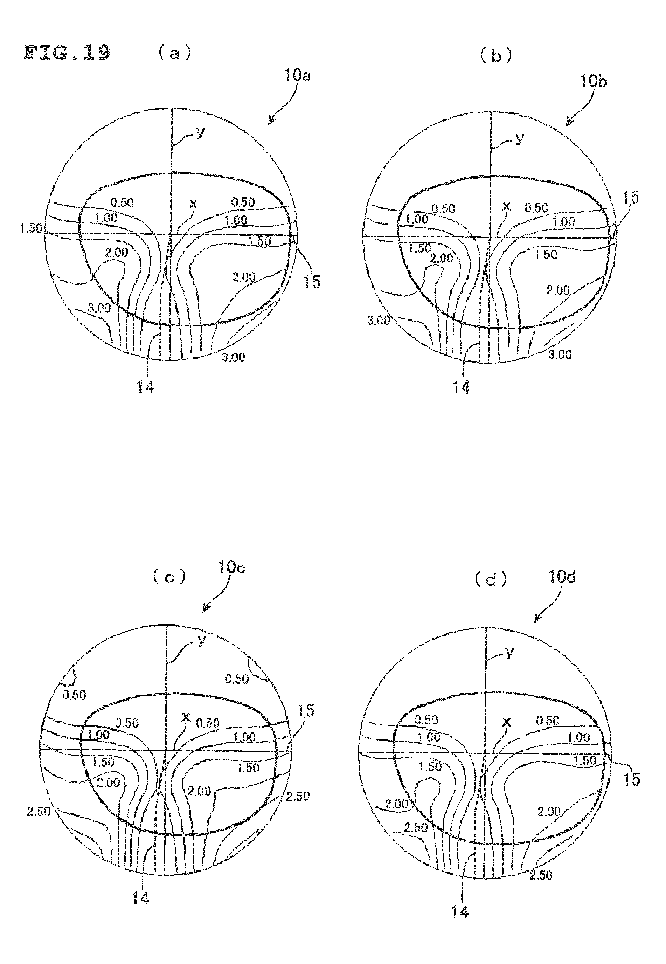

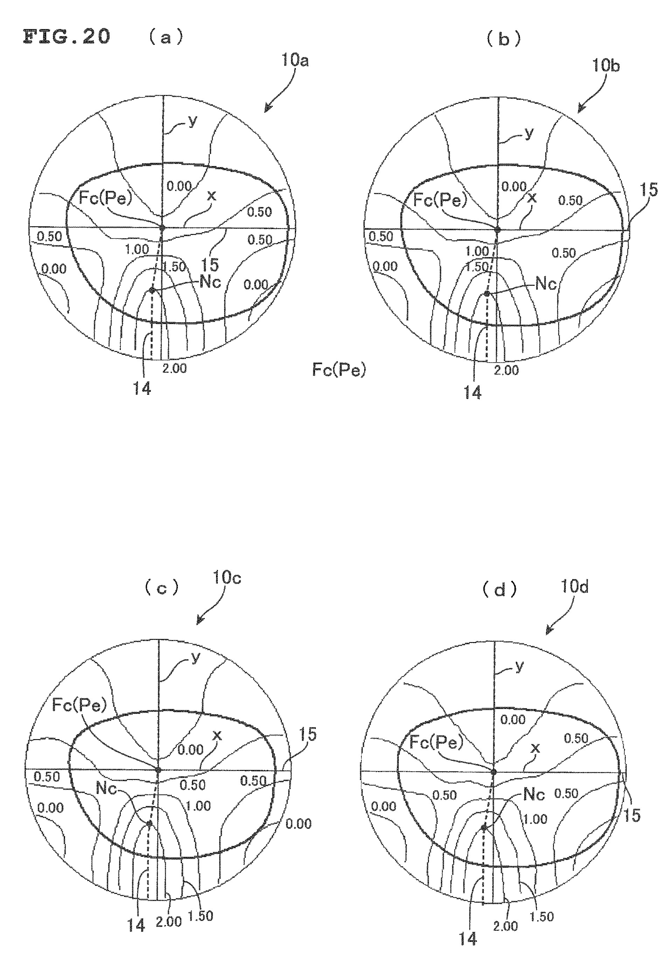

FIG. 19 (a) to FIG. 19 (d) show the astigmatism distribution observed through each position on the lenses 10a to 10d of example 1-1, example 1-2, comparative example 1, and conventional example 1, and FIG. 20(a) to FIG. 20(d) show the equivalent spherical power distribution observed through each position on the lenses 10a to 10d of example 1-1, example 1-2, comparative example 1 and conventional example 1. Note that FIG. 20 (a) to FIG. 20 (d) show the distance reference point Fc and the near reference point Nc for reference.

As shown in FIG. 15(a) to FIG. 15(c), the outer surface 19A of example 1-1, example 1-2, and comparative example 1 includes the toric surface element, thereby generating astigmatism. As shown in FIG. 17(a) to FIG. 17(c), the inner surface 19B of example 1-1, example 1-2, and comparative example 1 includes the toric surface element, thereby generating astigmatism in combination of the astigmatism caused by the toric surface and the asigmatism caused in the inner surface 19B of conventional example 1 shown in FIG. 17(d). However, this is not a simple combination, because aspherical correction is performed. As shown in FIG. 19 (a) to FIG. 19(c), the astigmatism of the entire lens caused by the outer surface 19A and the inner surface 19B of example 1-1, example 1-2, and comparative example 1, is almost equal to the astigmatism shown in FIG. 19(d). Accordingly, it is found that the shift of the surface power caused by the toric surface element of the outer surface 19A can be canceled by introducing the toric surface element to the inner surface 19B, in these examples and comparative examples.

The same thing can be said for the equivalent spherical power distribution, and as shown in FIG. 20 (a) to FIG. 20 (c), almost the same power distribution as the lens 10d of conventional example 1 shown in FIG. 20(d) can be obtained by introducing the toric surface element to the outer surface 19A, and introducing the toric surface element to the inner surface 19B for canceling the shift of the surface power caused by the toric surface element of the outer surface 19A, in the lenses 10a to 10c of these examples and comparative example.

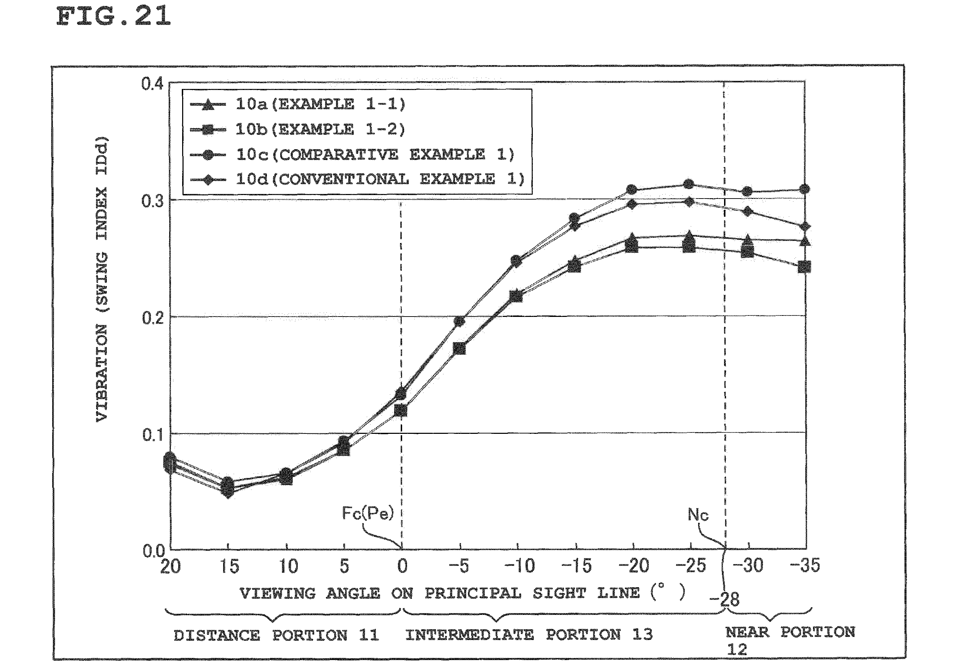

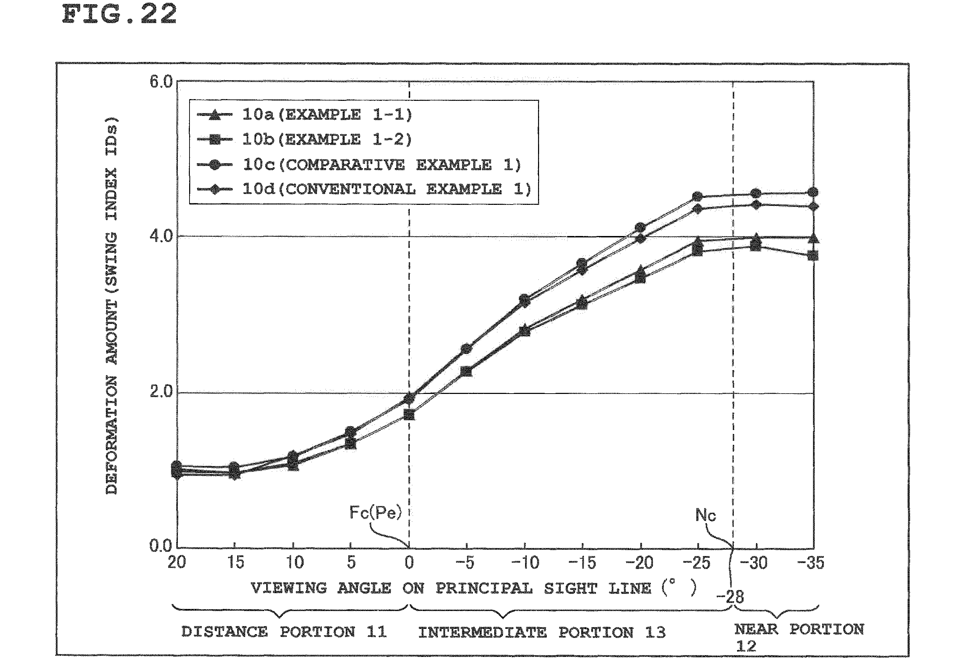

FIG. 21 and FIG. 22 show the results of obtaining the swing of the image viewed through the lenses 10a to 10d of example 1-1, example 1-2, comparative example 1, and conventional example 1, by the evaluation method of the swing described above. FIG. 21 shows the index IDd indicating a swing, and FIG. 22 shows the index IDs indicating a deformation amount. The viewing angle pitch of the rectangular pattern 50 is 10 degrees, and the shake of the head is set in right/left directions, and the shaking angle is set to 10 degrees in right and left respectively.

In FIG. 21, "total L" showing sum or average of vibrations of all grid lines, is set as index IDd, which is obtained by several viewing angles along the principal sight line 14 of each one of the lenses 10a to 10d. The fitting point Pe of each one of the lenses 10a to 10d is the intersection point of the outer surface 19A and the sight line 2 of a wearer in horizontal front view at a viewing angle of 0 degree, namely, at a primary position. The distance portion 11 extends from the fitting point Pe to 20 degrees upward, and the intermediate portion 13 extends from the fitting point Pe to the vicinity of -28 degrees downward, from which downward is the near portion 12.

In FIG. 22, "total L" showing sum or average of a variation area of all grid lines, is set as index IDs, which is obtained by several viewing angles along the principal sight line 14 of each one of the lenses 10a to 10d. The index IDs is expressed by ratio (%).

As shown in FIG. 21 and FIG. 22, in the lenses 10a to 10b of examples 1-1 and 1-2, index IDd and index IDs are smaller than those of the lens 10d of conventional example 1 almost all over the area of distance, intermediate and near portions on the principal sight line 14. Accordingly, it is found that the swing of the image can be improved by viewing the image through the lenses 10a and 10b of examples 1-1 and 1-2. The effect of improving the swing is expected to be large particularly from the lower part of the distance portion 11 to the intermediate portion 13 and the near portion 12.

Regarding the lens 10c of comparative example 1, improvement of the indexes IDd and IDs can be observed in the distance portion 11. However, both indexes IDd and IDs are larger than those of conventional example 1 in a range from the intermediate portion 13 to the near portion 12. Accordingly, it is found that improvement of the image swing can be hardly obtained in the lens 10c of comparative example 1.

Namely, it is found that in an outer surface progressive type lens, the effect of improving the swing of the image is hardly obtained even if introducing the toric surface to inner and outer surfaces in which the vertical surface power is larger than the horizontal surface power. It is also found that in other type lens, the swing of the image can be improved by introducing the toric surface to the inner and outer surfaces in which the vertical surface power is larger than the horizontal surface power. In the outer surface progressive type lens, the image tends to be expanded in the near portion. Therefore, such a tendency of expanding the image is increased if the toric surface is introduced to the near portion to the extend beyond an improvement effect, and as a result, in the outer surface progressive type lens, there is a possibility that the swing of the image is expanded in the region from the intermediate portion to the near portion.

One of the factors of reducing the swing of the image by the toric surface element in which the vertical surface power is larger than the horizontal surface power, can be considered as follows: it is possible to suppress a displacement of an angle formed by the sight line and the object-side surface, with respect to a movement of the sight line when viewing an object through a lens, by introducing the toric surface. If the displacement of the angle formed by the sight line and the object-side surface is small, it can be considered that generation of various aberrations such as curvature of field can be suppressed, and there is an effect of reducing the swing of the image obtained through the lens.

3. Embodiment 2

3.1 Example 2-1

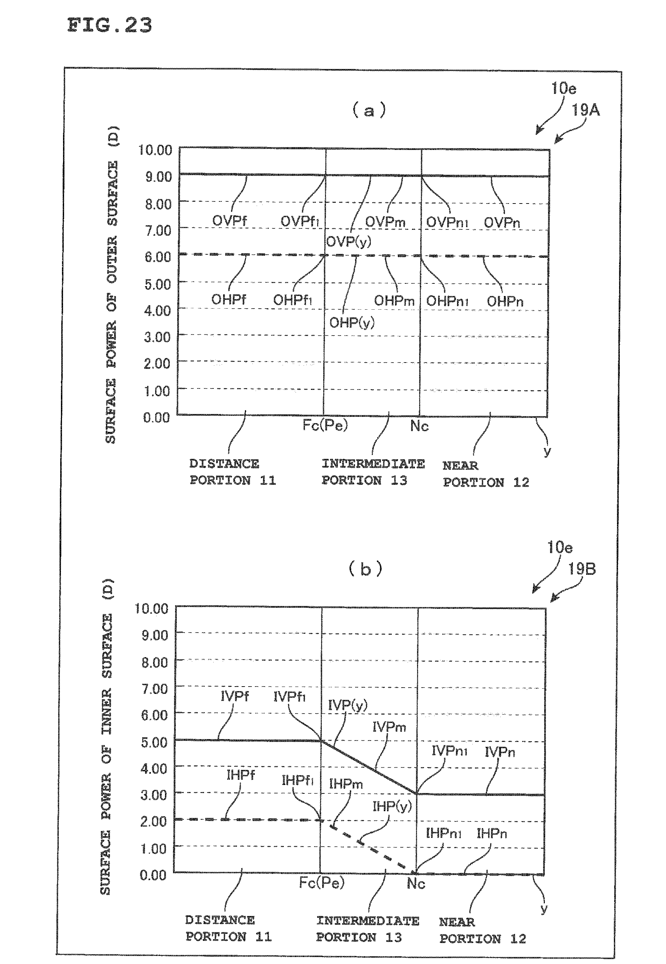

A lens 10e of example 2-1 was designed, as surface powers of the outer surface 19A and inner surface 19B were shown respectively in FIG. 23(a) and FIG. 23(b). The lens 10e of example 2-1 is called an inner surface progressive addition lens including the progressive element in the inner surface 19B. The basic spectacle specification is as follows; Refractive index of a lens base material:1.67, corridor length:14mm, prescription power (distance power, Sph):4.00D, and addition power (Add):2.00D. Note that the lens 10e of example 2-1 has a diameter of 65 mm, and astigmatic power is not included in the spectacle specification. The lens 10e of example 2-1 is a lens of plus power for distance vision with a prescription mean power of 4.0 (D) in the distance portion 11. The lens 10e of example 2-1 includes the toric surface element on inner/outer surfaces. Also, terms and expressions described in FIG. 23(a) and FIG. 23(b) are used in common with those of FIG. 11 (a) and FIG. 11(b).

The lens 10e of example 2-1 satisfies the conditions of the abovementioned formulas (1a), (1b), (1c'), (2a), and (2b). Accordingly, the outer surface 19A includes the first toric surface element TF1, and the inner surface 19B includes the second toric surface element TF2.

The structure of the lens 10e of example 2-1 is similar to the lens 10a of example 1-1. Specifically, vertical (vertical direction) surface power $OVPf_1$ at distance reference point Fc, and vertical surface power $OVPn_1$ at near reference point Nc are equally 9.0(D), and formula (1b) is satisfied. Further, horizontal (horizontal direction) surface power $OHPf_1$ at distance reference point Fc is 6.0(D), which is smaller than $OVPf_1$ by 3.0(D), and formula (1a) is satisfied. Horizontal surface power $OHPn_1$ is smaller than vertical surface power $OVPn_1$ by 3.0(D) at near reference point Nc, and formula (1c') is satisfied. At a point corresponding to the distance reference point Fc and at a point corresponding to the near reference point Nc on the inner surface 19B, difference between $IVPf_1$ and $IHPf_1$ is 3.0 (D), and difference between $IVPn_1$ and $IHPn_1$ is 3.0(D), and formulas (2a) and (2b) are satisfied. Namely, outer surface 19A includes the first toric surface element TF1, and inner surface 19B includes the second toric surface element TF2 for canceling the first toric surface element TF1 on the outer surface 19A.

Vertical surface power along the principal sight line 14 on the outer surface 19A of example 2-1 is as follows:

surface power OVPf of the distance portion 11, surface power OVPm of the intermediate portion 13, and surface power OVPn of the near portion 12 are constantly 9.0(D), and formula (1ba) is satisfied. Regarding the horizontal surface power, surface power OHPf of the distance portion 11, surface power OHPm of the intermediate portion 13 and surface power OHPn of the near portion 12 are constantly 6.0(D). Accordingly, a simple toric surface is formed on the outer surface 19A in which vertical surface powers OVPf, OVPm and OVPn are larger than horizontal surface powers OHPf, OHPm, and OHPn by 3.0(D) respectively along the principal sight line 14 on the outer surface 19A, and formula (1aa) and (1ca') are satisfied. Typically, the entire outer surface 19A is a simple toric surface.

The vertical surface power along the line corresponding to the principal sight line 14 on the inner surface 19B is as follows: surface power IVPf in the distance portion is 5.0(D), surface power IVPm in the intermediate portion 13 is progressively reduced, and surface power IVPn in the near potion 12 is 3.0(D), and a specific addition (2.0(D)) is obtained. Horizontal surface power is as follows: surface power IHPf in the distance portion 11 is 2.0(D), surface power IHPm in the intermediate portion 13 is progressively reduced, and surface power IHPn in the near portion 12 is 0.0(D), and a specific addition (2.0(D)) is obtained. Accordingly, inner surface 19B satisfies formulas (2aa) And (2ba), and includes the toric surface for canceling the surface power caused by the toric surface of the outer surface 19A.

3.2 Example 2-2

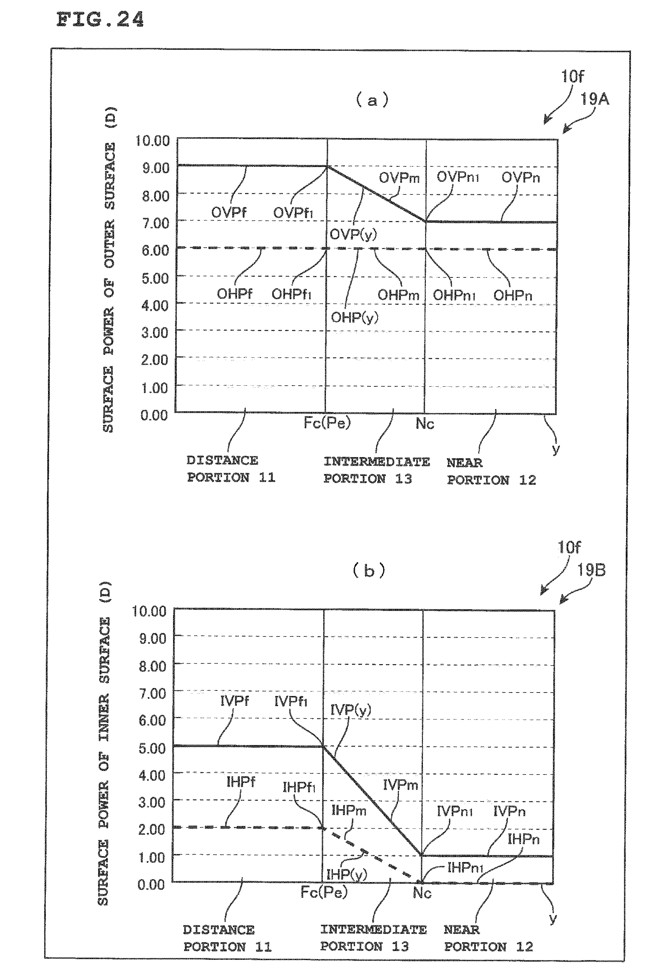

A lens 10f of example 2-2 was designed, as surface powers of the outer surface 19A and inner surface 19B were shown respectively in FIG. 24(a) and FIG. 24(b). Similarly to example 1-2, the lens 10f of example 2-2 is a lens called an outer surface degressive addition lens, including the progressive element in the inner surface 19B, and includes the degressive element in the outer surface 19A. The basic spectacle specification is the same as example 2-1. Also, terms and expressions described in FIG. 24 (a) and FIG. 24 (b) are used in common with those of FIG. 11(a) and FIG. 11(b).

The lens 10f of example 2-2 also satisfies the conditions of the abovementioned formulas (1a), (1b), (1c'), (2a), and (2b). Accordingly, the outer surface 19A of the lens 10f includes the first toric surface element TF1, and the inner surface 19B includes the second toric surface element TF2.

Specifically, vertical surface power $OVPf_1$ is 9.0(D) at distance reference point Fc, which is larger than vertical surface power $OVPn_1$ by 2.0(D) at near reference point Nc, and formula (1b) is satisfied. Also, horizontal surface power $OHPf_1$ at distance reference point Fc is 6.0 (D), which is smaller than $OVPf_1$ by 3.0 (D), and formula (1a) is satisfied. $OHPn_1$ is smaller than $OVPn_1$ by 1.0(D) at near reference point Nc, and formula (1c') is satisfied. At the points corresponding to the distance reference point Fc and the near reference point Nc of the inner surface 19B, difference between $IVPf_1$ and $IHPf_1$ is 3.0(D), and difference between $IVPn_1$ and $IHPn_1$ is 1.0(D), and formulas (2a) and (2b) are satisfied. Accordingly, the outer surface 19A includes the first toric surface element TF1, and the inner surface 19B includes the second toric surface element TF2 for canceling the first toric surface element TF1 of the outer surface 19A.

In a surface along the principal sight line 14 of the lens 10f of example 2-2, vertical surface power of the outer surface 19A is as follows: surface power OVPf in the distance portion 11 is 9.0(D), surface power IVPm in the intermediate portion 13 is progressively reduced, and surface power IVPn in the near portion 12 is 7.0(D). The horizontal surface power of the outer surface 19A is as follows: surface power OHPf in the distance portion 11, surface power OHPm in the intermediate portion 13, and surface power OHPn in the near portion 12 are constantly 6.0(D). Accordingly, a toric surface is formed along the principal sight line 14 on the outer surface 19A in which vertical surface power OVPf is larger by 3.0(D) than horizontal surface power OHPf in the distance portion 11, and vertical surface power OVPn is larger by 1.0(D) than horizontal surface power OHPn in the near portion 12. Accordingly, formula (1aa), (1ba), and (1ca') are satisfied.

The vertical surface power of the inner surface 19B is as follows: surface power IVPf in the distance portion 11 is 5.0(D), surface power IVPm in the intermediate portion 13 is progressively reduced, surface power IVPn in the near portion 12 is 1.0(D), and a specific addition (2.0(D)) is obtained for the vertical surface power of the outer surface 19A. The horizontal surface power is as follows: surface power IHPf in the distance portion 11 is 2.0(D), surface power IHPm in the intermediate portion 13 is progressively reduced, surface power IHPn in the near portion 12 is 0.0(D), and a specific addition (2.0(D)) is obtained for the horizontal surface power of the outer surface 19A. Accordingly, formulas (2aa) and (2ba) are satisfied, and the inner surface 19B includes the toric surface for canceling the surface power caused by the toric surface of the outer surface 19A.

3.3 Comparative example 2

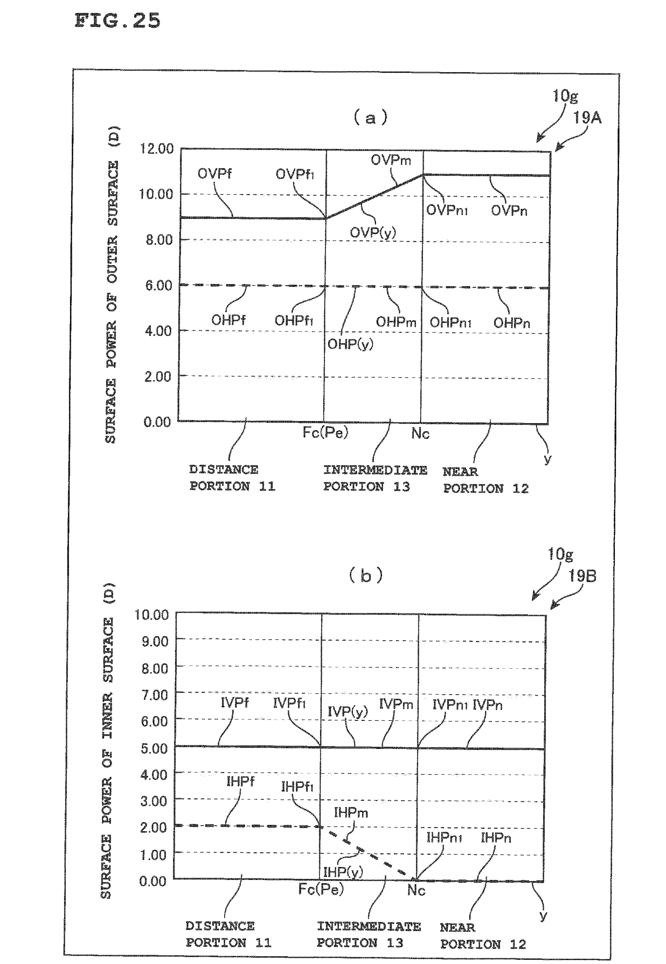

A lens 10g of comparative example 2 was designed, as surface powers of the outer surface 19A and inner surface 19B were shown respectively in FIG. 25(a) and FIG. 25(b). The lens 10g of comparative example 2 is a lens called an inner/outer surface progressive addition lens, including the progressive element in the outer surface 19A and in the inner surface 19B. The basic spectacle specification is the same as example 2-1. Also, terms and expressions described in FIG. 25(a) and FIG. 25(b) are used in common with those of FIG. 11(a) and FIG. 11 (b) .

In the lens 10g of comparative example 2, vertical surface power $OVPn_1$ at near reference point Nc is larger than vertical surface power $OVPf_1$ at distance reference point Fc. Accordingly, similarly to comparative example 1, although formulas (1a), (1c'), (2a), and (2b) are satisfied, formula (1b) is not satisfied. Accordingly, although the lens 10g includes the toric surface canceled by the inner/outer surfaces, the first toric surface element TF1 and the second toric surface element TF2 are not included.

Specifically, horizontal surface power $OHPf_1$ at distance reference point Fc is 6.0(D), which is smaller than $OVPf_1$ by 3.0(D), and formula (1a) is satisfied. However, vertical surface power $OVPf_1$ at distance reference point Fc is 9.0(D) which is smaller by 2.0(D) than vertical surface power $OVPn_1$ at near reference point Nc, and formula (1b) is not satisfied. At near reference point Nc, $OHPn_1$ is smaller than $OVPn_1$ by 5.0(D), and formula (1c') is satisfied. At the points corresponding to the distance reference point Fc and the near reference point Nc in the inner surface 19B, difference between $IVPf_1$ and $IHPf_1$ is 3.0(D), and difference between $IVPn_1$ and $IHPn_1$ is 5.0(D), and formulas (2a) and (2b) are satisfied. Accordingly, although the outer surface 19A does not include the first toric surface element TF1, outer surface 19A and inner surface 19B include the toric surface element for canceling each other.

Regarding the surface power along the principal sight line 14 of the lens 10g of comparative example 1, the vertical surface power of the outer surface 19A is as follows: surface power OVPf is 9.0(D) in the distance portion 11, surface power OVPm is progressively increased in the intermediate portion 13, and surface power OVPn in the near portion 12 is 11.0(D). The horizontal surface power of the outer surface 19A is as follows: surface power OHPf in the distance portion 11, surface power OHPm in the intermediate portion 13, and surface power OHPn in the near portion 12 are constantly 6.0(D). Accordingly, a toric surface is formed along the principal sight line 14 on the outer surface 19A in which vertical surface power OVPf is larger by 3.0(D) than horizontal surface power OHPf in the distance portion 11, and vertical surface power OVPn is larger by 5.0(D) than horizontal surface power OHPn in the near portion 12. Accordingly, although formulas (1aa) and (1ca') are satisfied, formula (1ba) is not satisfied.

The vertical surface power of the inner surface 19B is as follows: surface power IVPf in the distance portion 11, surface power IVPm in the intermediate portion 13, and surface power IVPn in the near portion 12 are constantly 5.0(D), and a specific addition (2.0(D)) is obtained for the vertical surface power of the outer surface 19A. The horizontal surface power is as follows : surface power IHPf in the distance portion 11 is 2.0(D), surface power IHPm in the intermediate portion 13 is progressively reduced, surface power IHPn in the near portion 12 is 0.0(D), and a specific addition (2.0(D)) is obtained for the horizontal surface power of the outer surface 19A.

Vertical surface power IVPf is larger by 3 . 0 (D) than horizontal surface power IHPf in the distance portion 11, and vertical surface power IVPn is larger by 5.0(D) than horizontal surface power IHPn in the near portion 12, along the line corresponding to the principal sight line 14 on the inner surface 19B of the lens 10g. Accordingly, formulas (2aa) and (2ba) are satisfied, and the surface power by the toric surface of the outer surface 19A is canceled by the toric surface formed on the inner surface 19B.

3.4 Conventional example 2

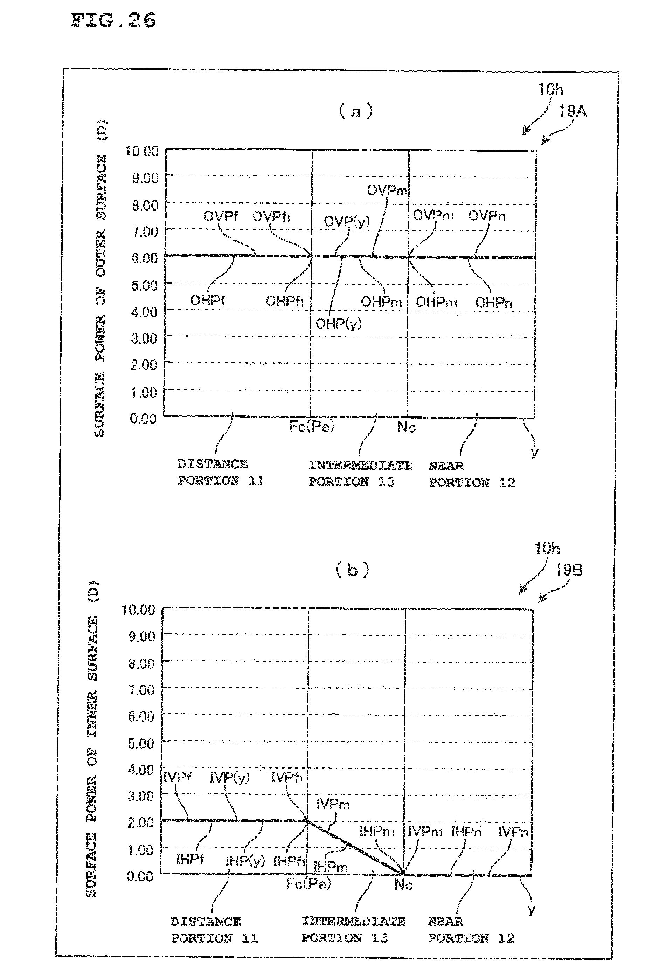

A lens 10h of conventional example 2 was designed, as surface powers of the outer surface 19A and inner surface 19B were shown respectively in FIG. 26(a) and FIG. 26(b). The lens 10h of the conventional example 2 is the lens called an inner surface progressive addition lens with outer surface 19A formed as a spherical surface, and including the progressive element in the inner surface 19B. The basic spectacle specification is the same as example 2-1. Also, terms and expressions described in FIG. 26 (a) and FIG. 26 (b) are used in common with those of FIG. 11(a) and FIG. 11(b).

In the lens 10h of conventional example 2, vertical surface powers OVPf, OVPm, and OVPn of the outer surface 19A are 6.0(D) which are equal to horizontal surface powers OHPf, OHPm, and OHPn on the outer surface 19A. Vertical surface powers IVPf, IVPm, and IVPn of the inner surface 19B are equal to horizontal surface powers IHPf, IHPm, and iHPn respectively, the surface power in the distance portion 11 is 2.0(D), and the surface power in the near portion 12 is 0.0(D), and a specific addition is obtained. Accordingly, outer surface 19A and inner surface 19B of the lens 10h of conventional example 2 don't include the toric surface.

3.5 Evaluation

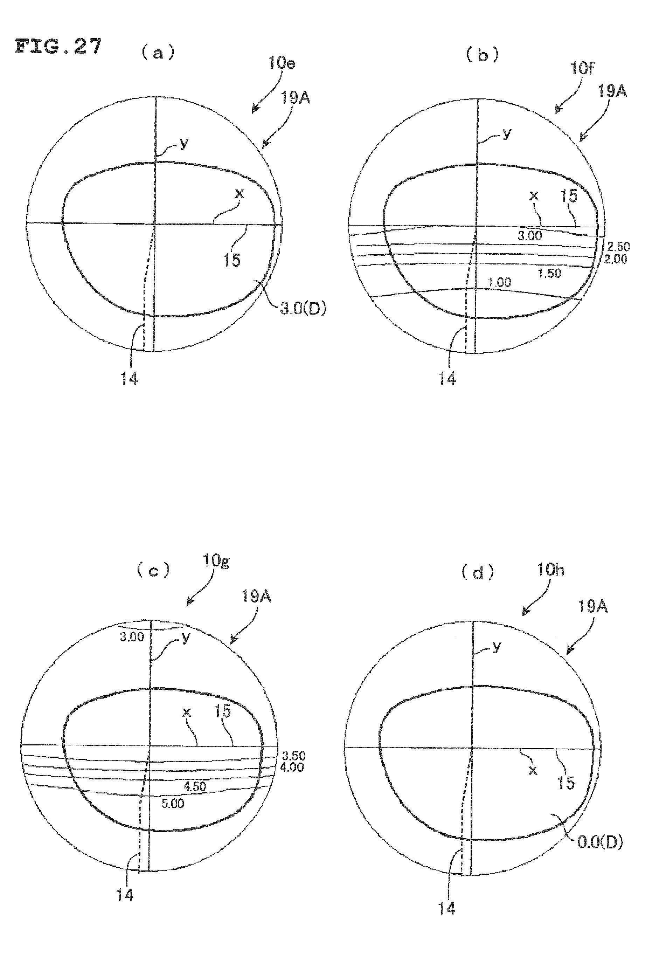

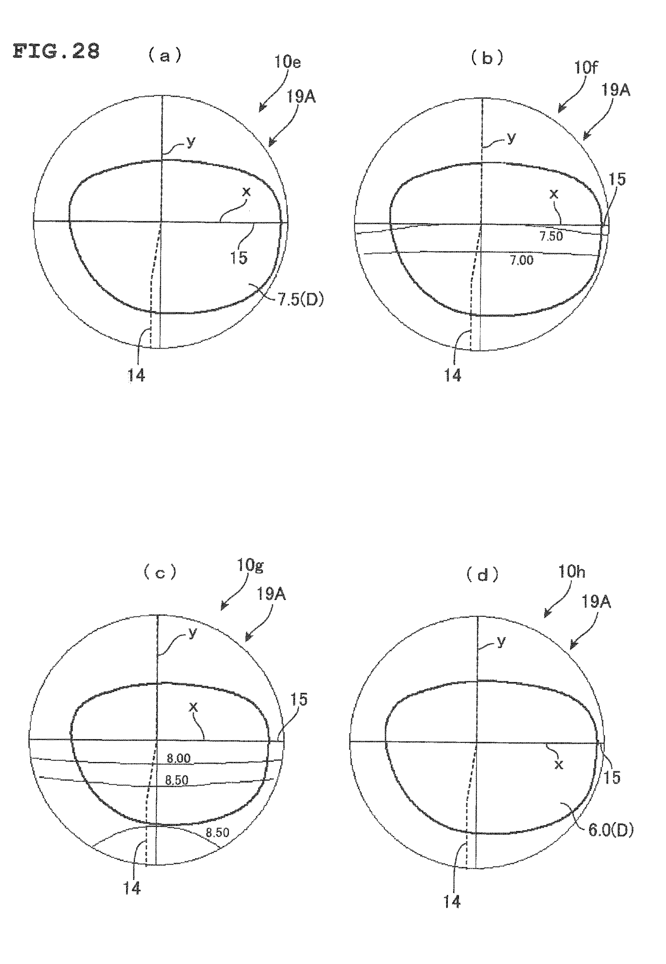

FIG. 27 (a) to FIG. 27 (d) respectively show the surface astigmatism distribution on the outer surface 19A of the lenses 10e to 10h of example 2-1, example 2-2, comparative example 2, and conventional example 2, and FIG. 28 (a) to FIG. 28(d) show the equivalent spherical surface power distribution on the outer surface 19A of the lenses 10e to 10h of example 2-1, example 2-2, comparative example 2, an conventional example 2.

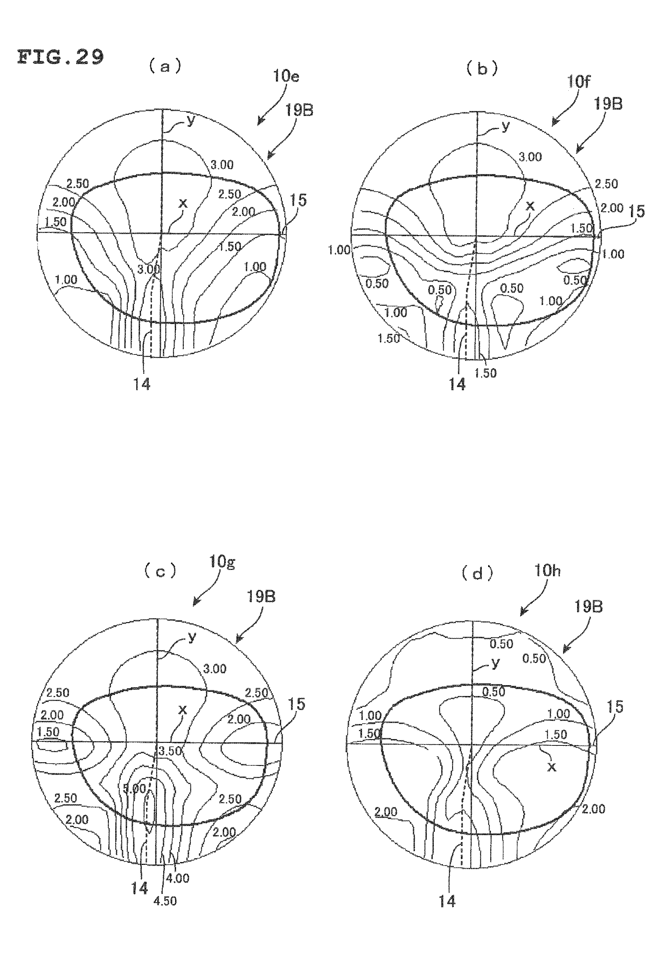

FIG. 29(a) to FIG. 29(d) show the surface astigmatism distribution on the inner surface 19B of the lenses 10e to 10h of example 2-1, example 2-2, comparative example 2, and conventional example 2, and

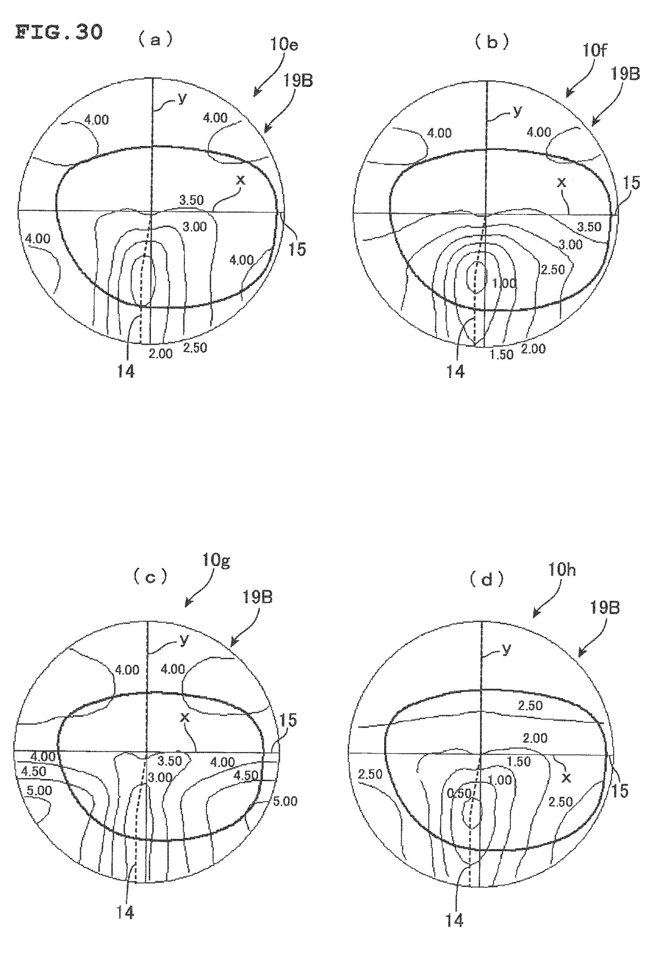

FIG. 30(a) to FIG. 30(d) show the equivalent spherical surface power distribution on the inner surface 19B of the lenses 10e to 10h of example 2-1, example 2-2, comparative example 2, and conventional example 2.

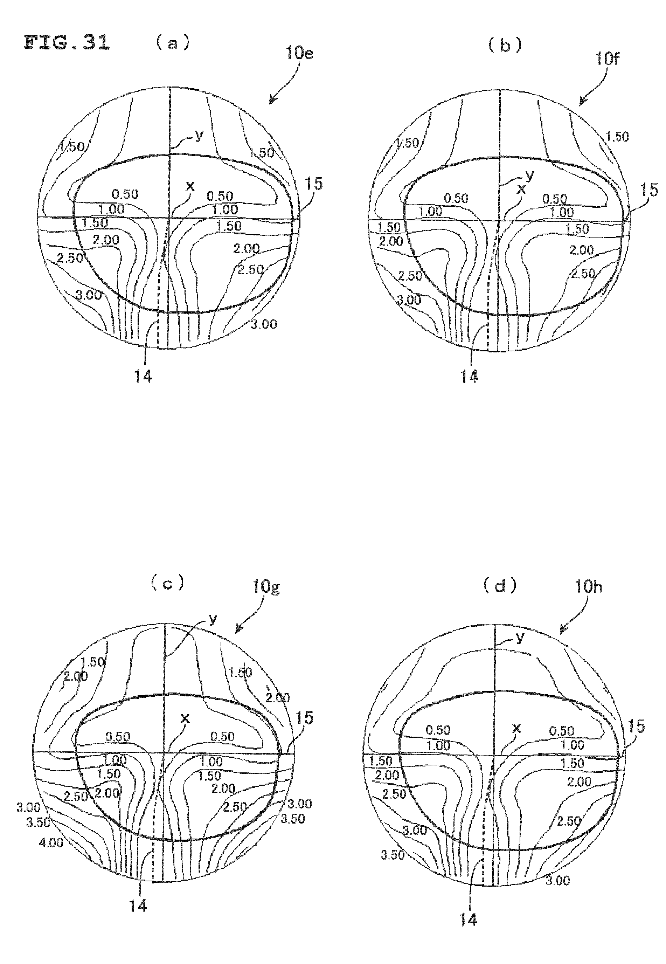

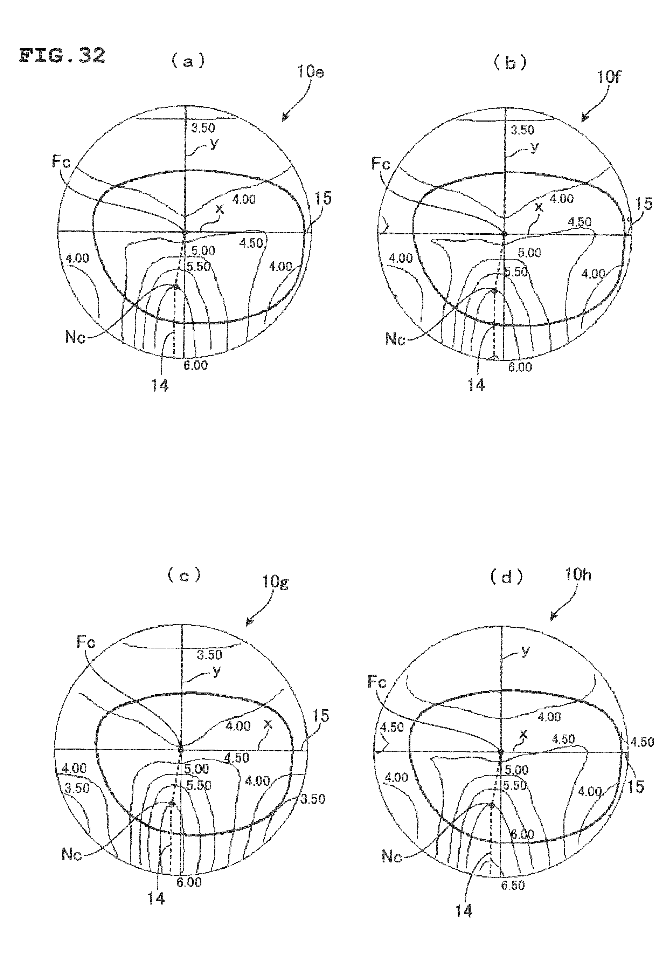

FIG. 31(a) to FIG. 31(d) show the astigmatism distribution when observing it through each position on the lenses 10e to 10h of example 2-1, example 2-2, comparative example 2, and conventional example 2, and FIG. 32(a) to FIG. 32(d) show the equivalent spherical power distribution when observing it through each position on the lenses 10e to 10h of example 2-1, example 2-2, comparative example 2, and conventional example 2.

In these examples, comparative example, and conventional example, the astigmatism caused by the toric surface element of the outer surface 19A shown in FIG. 27(a) to FIG. 27(c), is canceled by the toric surface element of the inner surface 19B shown in FIG. 29(a) to FIG. 29(c), and as shown in FIG. 31(a) to FIG. 31(d), it is possible to obtain the lenses 10e to 10g of example 2-1, example 2-2, and comparative example 2 as a whole, having the similar asitgmatism as the lens 10h of conventional example 2. The same thing can be said for the equivalent spherical surface power distribution.

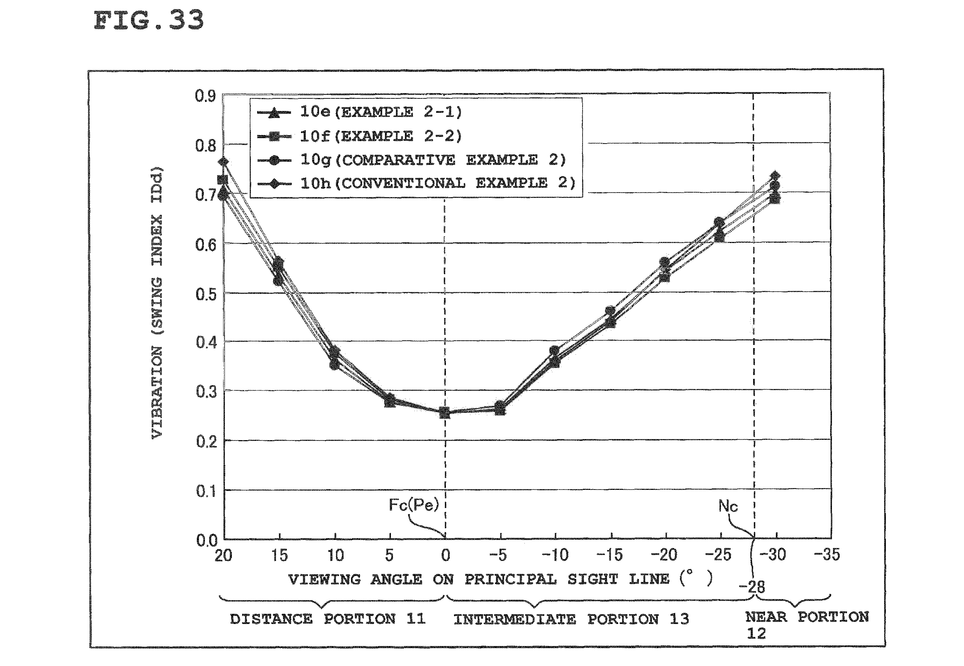

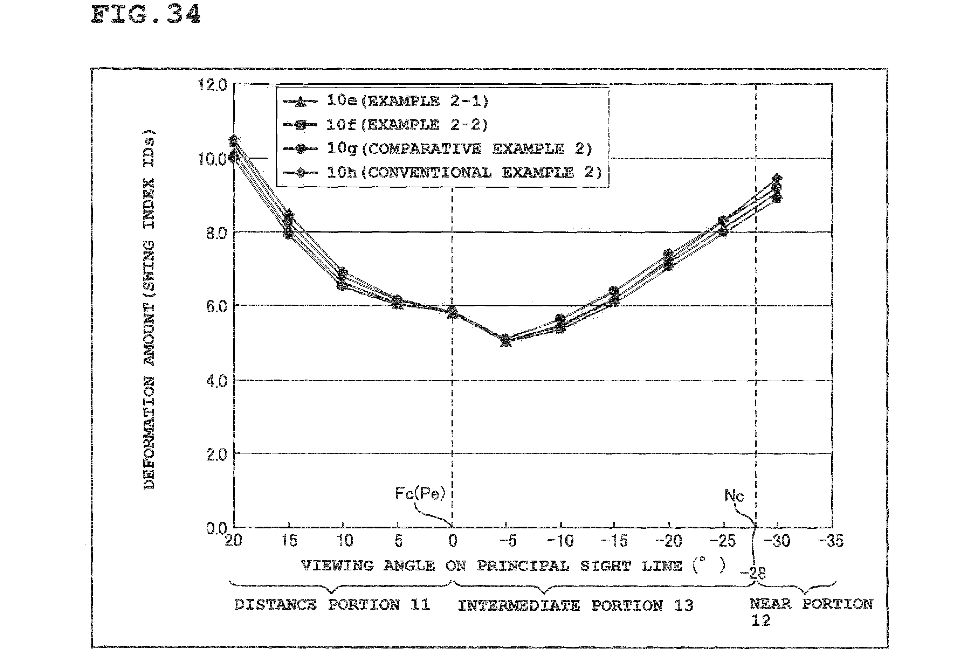

FIG. 33 and FIG. 34 show the result of evaluating the swing of the image viewed through the lenses 10e to 10h of example 2-1, example 2-2, comparative example 2, and conventional example 2, similarly to FIG. 21 and FIG. 22. In the lenses 10e to 10f of example 2-1 and example 2-2, index IDd and index IDs almost all over the distance, intermediate, and near portions on the principal sight line 14 are the same or smaller than the lens 10h of conventional example 1. Accordingly, it is found that the swing of the image can be improved by viewing it through the lenses 10e and 10f of examples 2-1 and 2-2. The effect of improving the swing is estimated to be large particularly in the distance portion 11 and the near portion 12.

In the lens 10g of comparative example 2, improvement of the indexes IDd and IDs can be observed in the distance portion 11. However, indexes IDd and IDs are larger than conventional example 2, in a part from the intermediate portion 13 to the near portion 12. Accordingly, it is also found that the improvement of the swing of the image is hardly obtained in the lens 10g of comparative example 2 as well.

Thus, it is found that the swing of the image can be improved in the plano lens having prescription power (distance power) of 0.0(D) and the lens for distance vision having plus prescription power, by introducing the toric surface element to the outer surface 19A and the inner surface 19B of the lens 10. Similarly, the swing of the image can also be improved in the lens for near vision having minus prescription power.

Further, in the lens 10 having the toric surface element on inner/outer surfaces, the vertical surface power is larger than the horizontal surface power. Conversely, the horizontal surface power is smaller than the vertical surface power, and a horizontal curvature becomes small. Therefore, the lens 10 is suitable for a spectacle lens which is long in the horizontal direction and curved along a face. Further, when mounting the lens in a frame, an oval-shaped (horizontally long) lens is easily formed, which is long in the horizontal direction (lateral direction or right and left direction) of the lens 10. Accordingly, the lens 10 having the toric surface element in which the vertical surface power is larger than the horizontal surface power, also has an advantage that a lens easily adapted to a large spectacle frame 20 can be provided.

In the above description, the rectangular pattern 50 having square grids, is used as the pattern for observing indexes for evaluation. However, precision and density of evaluation can be changed in each direction by changing a pitch of the grids in the horizontal direction and in the vertical direction, or the precision and density of evaluation can also be changed by increasing the number of grids.

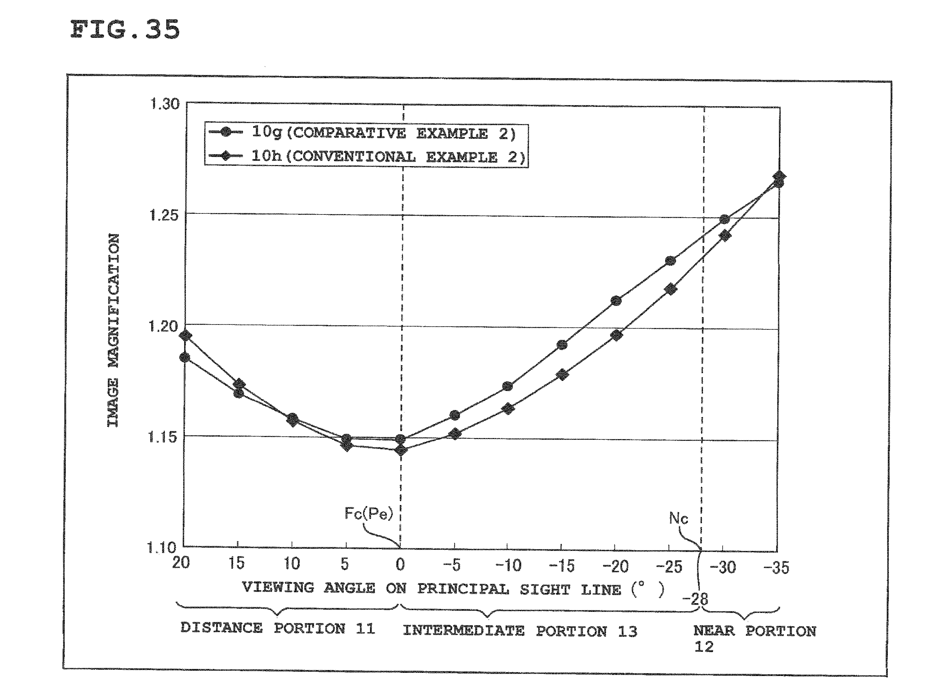

FIG. 35 shows an image magnification on the principal sight line 14 in the lens 10g of comparative example 2 and the lens 10h of conventional example 2, which is obtained by a ray tracing method. The image magnification of the lens 10g of comparative example 2 is larger than the image magnification of the lens 10h of conventional example 2 in a wide range from a lower side of the distance portion 11 to the near portion 12 on the principal sight line 14. Particularly, the image magnification is largely improved in a range from the whole area of the intermediate portion 13 to an upper side of the near portion 12. Accordingly, the field would be excellent in a wide area from the intermediate portion 13 to the near portion 12. Although not shown, the same result is obtained even when the image magnification of comparative example 1 and the image magnification of conventional example 1 are compared.

The lens 10 of comparative example 1 and comparative example 2 satisfies the following conditions at distance reference point Fc and near reference point Nc.

$$OVPf_1 > OHPf_1 \quad \dots \quad (1a)$$

$$OVPn_1 > OVPf_1 \quad \dots \quad (1d)$$

$$OVPn_1 \geq OHPn_1 \ldots (1c)$$

$$OVPn_1 > OHPn_1 \ldots (1c')$$

$$IVPf_1 - IHPf_1 = OVPf_1 - OHPf_1 \ldots (2a)$$

$$IVPn_1 - IHPn_1 = OVPn_1 - OHPn_1 \ldots (2b)$$

It is found that the lens having such a vertical toric surface on inner/outer surfaces, is the lens capable of further easily obtaining the effect of improving the image magnification, in addition to the improvement of the swing of the image.

The surface along the principal sight line 14 of comparative example 1 and comparative example 2 satisfy the following conditions.

$$OVPf > OHPf \ldots (1aa)$$

$$OVPn > OVPf \ldots (1da)$$

$$OVPn \geq OHPn \ldots (1ca)$$

$$OVPn > OHPn \ldots (1ca')$$

$$IVPf - IHPf = OVPf - OHPf \ldots (2aa)$$

$$IVPn - IHPn = OVPn - OHPn \ldots (2ba)$$

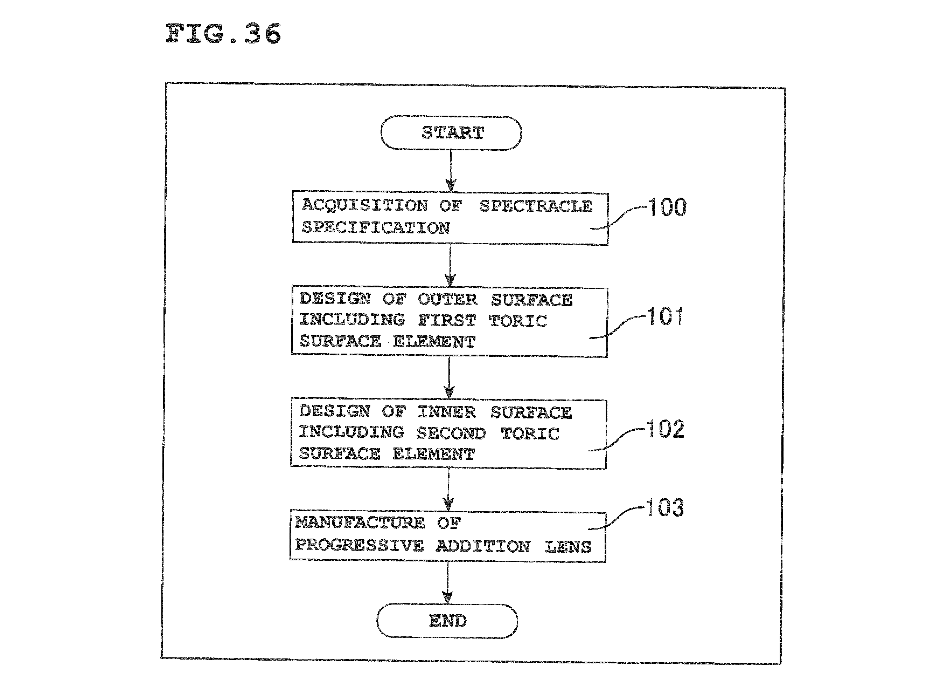

FIG. 36 shows an outline of a process of designing and manufacturing the abovementioned progressive addition lens for spectacles. When the spectacle specification of a user is acquired in step 100, the outer surface (object-side surface) 19A including the first toric surface element TF1 satisfying conditions (1a) to (1c), is designed in step 101. The first toric surface element TF1 preferably includes condition (1c').

Next, the inner surface (eyeball-side surface) 19B including the second toric surface element TF2 is designed under conditions (2a) and (2b) in step 102. The second toric surface element TF2 is the toric surface, thereby canceling the shift of the surface power formed on the outer surface 19A by the first toric surface element TF1. Further, the lens 10 designed in the abovementioned step, is manufactured in step 103.

Such a designing method can be provided by recording it in a suitable medium such as a memory and ROM as a computer program (program product) for executing the abovementioned processing 100 to 102 by a computer including hardware resources suitable for the CPU and memory, etc.

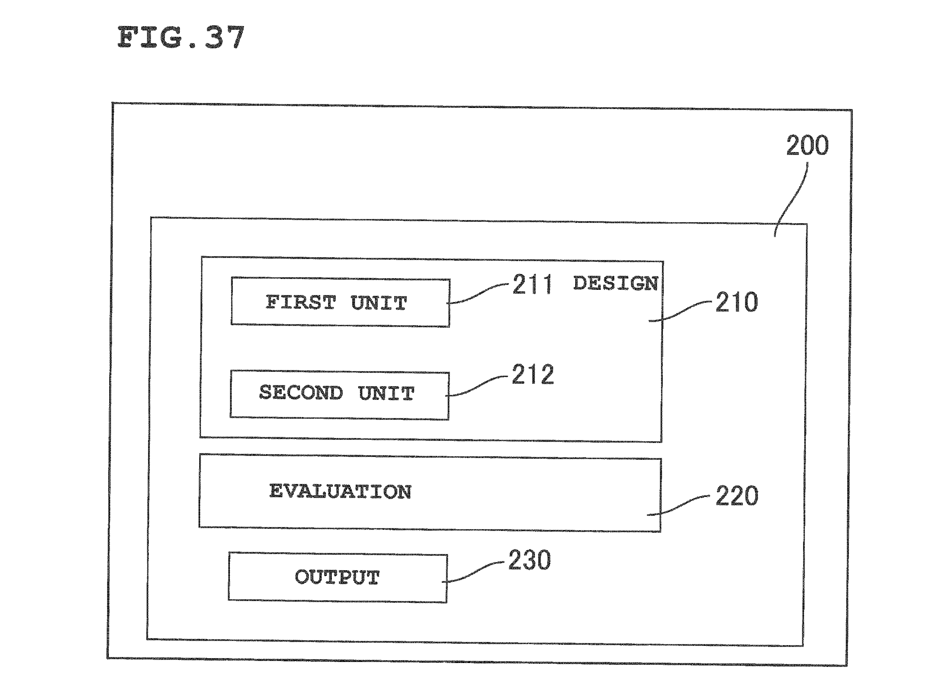

FIG. 37 shows an example of a device for designing the lens 10. Such a designing device 200 includes a designing unit 210 for designing the lens 10 based on a spectacle specification; an evaluation unit 220 for obtaining and evaluating the swing indexes IDd and IDs of the designed lens 10 by the abovementioned method; and an output unit 230 for setting the swing index IDd obtained by the evaluation unit 220 in an easily viewable state by a user (wearer), for example in a graphed state, and outputting the graphed swing index. By the output unit 230, the user can select the lens 10 with less swing, according to his/her own judgment.

The designing unit 210 includes a first unit 211 for designing the object-side surface (outer surface) 19A, and a second unit 212 for designing the eyeball-side surface (inner surface) 19B. The first unit 211 has a function of performing processing of step 101 of the abovementioned designing method, and the second unit 212 has a function of performing processing of step 102 of the abovementioned designing method. A personal computer is an example of the designing device 200, including resources such as CPU, memory, and display. The designing device 200 including the abovementioned function can be executed by downloading and executing a program of causing the personal computer to function as the designing device 200.

The above explanation is given for a case that a distance prescription does not include an astigmatic prescription. However, the astigmatic prescription can be included, by combining toric surface (toroidal surface) components on the inner surface side, for correcting astigmatism. Further, when the lens has a large thickness, a lens with high precision can be provided by correcting the inner surface side in consideration of a shape factor.

Description of Signs and Numerals

| 1 | Spectacle |
|---|---|
| 10, 10L, 10R | Lens |
| 11 | Distance portion |
| 12 | Near portion |
| 13 | Intermediate portion (progressive portion) |
| 19A | Object-side surface |
| 19B | Eyeball-side surface |
| 20 | Frame |

**Claims**

1. A progressive addition lens, comprising:

   a distance portion and a near portion;
   an object side surface including a first toric surface element; and
   an eyeball side surface including a second toric surface element that cancels the first toric surface element, wherein the first toric surface element is the element in which a vertical surface power $OVPf_1$ at a distance reference point which is previously defined in the distance portion on the object side surface, is larger than a horizontal surface power $OHPf_1$ at the distance reference point, and $OVPf_1$ is not less than a vertical surface power $OVPn_1$ at a near reference point which is previously defined in the near potion on the object side surface.

2. The progressive addition lens according to claim 1, wherein the first toric surface element is the element in which $OVPn_1$ is larger than horizontal surface power $OHPn_1$ at the near reference point.

3. The progressive addition lens according to claim 2, wherein regarding the second toric surface element, vertical surface power $IVPf_1$ at a point corresponding to the distance reference point on the eyeball-side surface, horizontal surface power $IHPf_1$ at a point corresponding to the distance reference point, vertical surface power $IVPn_1$ at a point corresponding to the near reference point, and horizontal surface power $IHPn_1$ at a point corresponding to the near reference point, and $OVPf_1$, $OHPf_1$, $OVPn_1$, and $OHPn_1$, satisfy the following conditions.

$$IVPf_1 - IHPf_1 = OVPf_1 - OHPf_1$$

$$IVPn_1 - IHPn_1 = OVPn_1 - OHPn_1$$

wherein astigmatic prescription is not included, and $IVPf_1$, $IHPf_1$, $IVPn_1$, and $IHPn_1$ are absolute values.

4. The progressive addition lens according to any one of claims 1 to 3, wherein the object-side surface includes a toric surface, in which a vertical surface power is larger than a horizontal surface power, and a difference between the vertical surface power and the horizontal surface power is constant.

5. A method for designing a progressive addition lens comprising a distance portion and a near portion, the method comprising:

designing an object-side surface so as to include a first toric surface element and
designing an eyeball-side surface so as to include a second toric surface element that cancels the first toric surface element,
wherein the first toric surface element is the element in which a vertical surface power $OVPf_1$ at a distance reference point which is previously defined in the distance portion on the object side surface, is larger than a horizontal surface power $OHPf_1$ at the distance reference point, and $OVPf_1$ is not less than a vertical surface power $OVPn_1$ at a near reference point which is previously defined in the near potion on the object side surface.

FIG.1

10R

10L

19A

10R

19B

20

1

# FIG. 2

(a)

Fc(Pe)
X
15
10R(10L)
Nc
14
y
11
13
x
12

(b)

19A
10R(10L)
19B

FIG.3

(a)

(b)

(c)

# FIG.4

OBJECT 9

ROTATION OF
HEAD 8

ROTATION
OF EYE 7

SIGHT LINE 2

LENS 10

EYEBALL 3

# FIG.5

ROTATION ANGLE OF HEAD SECTION

HORIZONTAL ANGLE FORMED BY FRONT DIRECTION OF TESTEE AND GAZE POINT

41

42

GAZE

DISCRIMINATING OBSERVATION

FIG. 6

EP 2 835 682 A1

FIG.7

FIG. 8

FIG. 9

FIG.10

FIG.11

FIG.12

(a)

(b)

# FIG.13

(a)

(b)

FIG.14

(a)

(b)

**FIG.15** (a)

(b)

(c)

(d)

FIG.16　（a）

（b）

（c）

（d）

FIG.17　（a）　　　　　　　　　（b）

（c）　　　　　　　　　（d）

**FIG.18**

（a）

10a
19B

y
4.50 x
4.00
4.00 3.50
15
3.00
14

（b）

10b
19B

y
4.50 4.00
3.50
3.00
x
2.50
15
4.00
2.00
14

（c）

10c
19B

y
x
4.00 4.50 4.00
4.50 4.00 4.50
5.00 5.00
15
14

（d）

10d
19B

3.00 3.00
y
3.00 x 2.50
2.00
15
3.00
3.00
1.50
14

FIG.19

FIG.20 (a)

(b)

(c)

(d)

# FIG.21

EP 2 835 682 A1

FIG.22

EP 2 835 682 A1

44

# FIG.23

(a)

SURFACE POWER OF OUTER SURFACE (D)

10e
19A

OVPf    OVPf1    OVPm    OVPn1    OVPn
OVP(y)
OHPf    OHPf1    OHPm    OHPn1    OHPn
OHP(y)

Fc(Pe)        Nc        y

DISTANCE          INTERMEDIATE    NEAR
PORTION 11        PORTION 13      PORTION 12

(b)

SURFACE POWER OF INNER SURFACE (D)

10e
19B

IVPf    IVPf1    IVP(y)    IVPm    IVPn1    IVPn
IHPf    IHPf1    IHPm    IHP(y)    IHPn1    IHPn

Fc(Pe)        Nc        y

DISTANCE          INTERMEDIATE    NEAR
PORTION 11        PORTION 13      PORTION 12

45

# FIG.24

(a)

SURFACE POWER OF OUTER SURFACE (D)

DISTANCE PORTION 11　INTERMEDIATE PORTION 13　NEAR PORTION 12

(b)

SURFACE POWER OF INNER SURFACE (D)

DISTANCE PORTION 11　INTERMEDIATE PORTION 13　NEAR PORTION 12

# FIG.25

(a)

10g
19A

SURFACE POWER OF OUTER SURFACE (D)

OVPf     OVPf1                OVPm

OVP(y)

OVPn1    OVPn

OHPf     OHPf1        OHPm    OHPn1    OHPn

OHP(y)

Fc(Pe)          Nc                    y

DISTANCE          INTERMEDIATE    NEAR
PORTION 11        PORTION 13      PORTION 12

(b)

10g
19B

SURFACE POWER OF INNER SURFACE (D)

IVPf    IVPf1    IVP(y)  IVPm   IVPn1 IVPn

IHPf    IHPf1

IHPm

IHPn1    IHPn

IHP(y)

Fc(Pe)          Nc                    y

DISTANCE          INTERMEDIATE    NEAR
PORTION 11        PORTION 13      PORTION 12

**FIG.26**

(a)

10h
19A

SURFACE POWER OF OUTER SURFACE (D)

10.00, 9.00, 8.00, 7.00, 6.00, 5.00, 4.00, 3.00, 2.00, 1.00, 0.00

OVPf  OVPf₁  OVP(y)  OVPm  OVPn₁  OVPn

OHPf  OHPf₁  OHP(y)  OHPm  OHPn₁  OHPn

Fc(Pe)  Nc  y

DISTANCE PORTION 11  INTERMEDIATE PORTION 13  NEAR PORTION 12

(b)

10h
19B

SURFACE POWER OF INNER SURFACE (D)

10.00, 9.00, 8.00, 7.00, 6.00, 5.00, 4.00, 3.00, 2.00, 1.00, 0.00

IVPf  IVP(y)  IVPf₁  IVPm  IHPn₁  IVPn₁  IHPn  IVPn

IHPf  IHP(y)  IHPf₁  IHPm

Fc(Pe)  Nc  y

DISTANCE PORTION 11  INTERMEDIATE PORTION 13  NEAR PORTION 12

**FIG.27** （a）

（b）

（c）

（d）

**FIG.28** （a）

（b）

（c）

（d）

EP 2 835 682 A1

FIG.29

(a)

(b)

(c)

(d)

FIG.30

(a)

(b)

(c)

(d)

**FIG.31** (a)

(b)

(c)

(d)

**FIG.32**

(a)

(b)

(c)

(d)

EP 2 835 682 A1

FIG.33

VIBRATION (SWING INDEX IDd)

Legend:
- 10e (EXAMPLE 2-1)
- 10f (EXAMPLE 2-2)
- 10g (COMPARATIVE EXAMPLE 2)
- 10h (CONVENTIONAL EXAMPLE 2)

VIEWING ANGLE ON PRINCIPAL SIGHT LINE (°)

Fc(Pe)    Nc

DISTANCE PORTION 11    INTERMEDIATE PORTION 13    NEAR PORTION 12

EP 2 835 682 A1

FIG.34

FIG. 35

FIG.36

```
            ┌─────────┐
            │  START  │
            └────┬────┘
                 │
                 ▼
       ┌──────────────────────────┐
  100 ─┤  ACQUISITION OF SPECTACLE │
       │       SPECIFICATION       │
       └──────────┬───────────────┘
                  │
                  ▼
       ┌──────────────────────────┐
  101 ─┤  DESIGN OF OUTER SURFACE  │
       │  INCLUDING FIRST TORIC    │
       │      SURFACE ELEMENT      │
       └──────────┬───────────────┘
                  │
                  ▼
       ┌──────────────────────────┐
  102 ─┤  DESIGN OF INNER SURFACE  │
       │  INCLUDING SECOND TORIC   │
       │      SURFACE ELEMENT      │
       └──────────┬───────────────┘
                  │
                  ▼
       ┌──────────────────────────┐
  103 ─┤      MANUFACTURE OF       │
       │  PROGRESSIVE ADDITION LENS│
       └──────────┬───────────────┘
                  │
                  ▼
            ┌─────────┐
            │   END   │
            └─────────┘
```

EP 2 835 682 A1

# FIG.37

EP 2 835 682 A1

# INTERNATIONAL SEARCH REPORT

International application No.

PCT/JP2013/060516

## A. CLASSIFICATION OF SUBJECT MATTER
*G02C7/06*(2006.01)i

According to International Patent Classification (IPC) or to both national classification and IPC

## B. FIELDS SEARCHED

Minimum documentation searched (classification system followed by classification symbols)
G02C7/06

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2006-350381 A (Hoya Corp.), 28 December 2006 (28.12.2006), paragraph [0078]; example 6; fig. 12 & WO 2005/066696 A1 | 1-5 |
| A | JP 2012-013742 A (Seiko Epson Corp.), 19 January 2012 (19.01.2012), entire text; all drawings & US 2011/0317127 A1 | 1-5 |
| A | JP 2002-372689 A (Seiko Epson Corp.), 26 December 2002 (26.12.2002), entire text; all drawings & WO 1997/019382 A1 | 1-5 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 May, 2013 (01.05.13) | 14 May, 2013 (14.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/060516

| C (Continuation). | DOCUMENTS CONSIDERED TO BE RELEVANT | |
|---|---|---|
| Category* | Citation of document, with indication, where appropriate, of the relevant passages | Relevant to claim No. |
| A | WO 2010/083860 A1 (Rodenstock GmbH),<br>29 July 2010 (29.07.2010),<br>entire text; all drawings<br>& DE 102009005214 A | 1-5 |
| P,A | JP 2012-220655 A (Seiko Epson Corp.),<br>12 November 2012 (12.11.2012),<br>entire text; all drawings<br>& EP 2508937 A1 | 1-5 |
| P,A | JP 2012-173595 A (Seiko Epson Corp.),<br>10 September 2012 (10.09.2012),<br>entire text; all drawings<br>& WO 2012/115258 A1 | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003344813 A